# EUROPEAN PATENT SPECIFICATION

(11) **EP 3 229 136 B1**
(45) Date of publication and mention of the grant of the patent: **12.01.2022**
(21) Application number: 17160038.0
(22) Date of filing: 09.03.2017
(51) Int. Cl.: G06F 9/48, G06F 9/54, G06F 21/62, G06F 21/81, H04W 52/02

(54) **APPLICATION CALLING MANAGEMENT METHODS AND APPARATUSES**
ANWENDUNGSAUFRUFVERWALTUNGSVERFAHREN UND -VORRICHTUNGEN
PROCÉDÉS ET APPAREILS DE GESTION D'APPEL D'APPLICATION

(30) Priority: 30.03.2016 CN 201610191089; 28.06.2016 WO PCT/CN2016/087396
(43) Date of publication of application: 11.10.2017
(73) Proprietor: Beijing Xiaomi Mobile Software Co., Ltd., Beijing 100085 (CN)
(72) Inventor: WANG, Baolin, Beijing, 100085 (CN); LIU, Ming, Beijing, 100085 (CN); LI, Nan, Beijing, 100085 (CN)
(74) Representative: Hughes, Andrea Michelle

(56) References cited:
- EP-A1- 2 993 584
- WO-A1-2014/130472
- CN-A- 105 159 816
- US-A1- 2015 169 872

## Description

### TECHNICAL FIELD

The present invention is related to the field of computer technology, and more particularly to application calling management methods and apparatuses.

### BACKGROUND

With development of computer technology, terminals such as handsets have become necessities for modern people. Various applications installed in terminals have brought about great convenience to people's work and life. For example, online shopping applications can be used for shopping, and office applications can be used for work.

When an application is started on a terminal, it may cause other applications to operate at the background. These other applications may push information to the terminal, thereby increasing the power consumption of the terminal. Document US 2015/169872 A1 discloses intercepting a call for a service by an application in an operating system of an electronic apparatus. Document CN 105 159 816 A relates to reducing power consumption by, when a mobile terminal enters a standby mode, capturing a behaviour of an application program in a background of the mobile terminal and collecting power consumption data of the behaviour of the application program and sending it to an application program power consumption analysis database stored in a cloud server.

### SUMMARY

To overcome the problem in the related art, the present invention provides application calling management methods and apparatuses as below.

According to a first aspect of embodiments of this invention, there is provided an application calling management method as according to claim 1.

According to a second aspect of the embodiments of this invention, there is provided an application calling management apparatus as according to claim 10.

According to a third aspect of the embodiments of this invention, there is provided an application calling management method as according to claim 11.

According to a fourth aspect of the embodiments of this invention, there is provided an application calling management apparatus as according to claim 12.

The technical solutions according to the embodiments of the invention have the following beneficial effects. A calling rule corresponding to a current calling is determined according to the background calling message; if a first calling rule matching the calling rule corresponding to the current calling exists in a terminal-disallowing-calling list, at least one application disallowed to be called is determined from the at least one target application according to the first calling rule; and it is disallowed to start in background the application disallowed to be called. In this way, when the first application calls and starts other applications in background, the system program can disallow starting some application(s) in background based on the terminal-disallowing-calling list. Thus, the power consumption of the terminal can be reduced.

It should be understood that both the foregoing general description and the following detailed description are only exemplary and explanatory and are not restrictive of the invention.

### BRIEF DESCRIPTION OF THE DRAWINGS

The accompanying drawings herein which are incorporated into and constitute a part of the description, illustrate the embodiments according to the present invention and embodiments not covered by the claimed invention, and serve to explain the principles of the present invention together with the description.
Fig. 1 is a flow chart showing an application calling management method according to an embodiment not containing all of the steps of the claimed invention.
Fig. 2 is a flow chart showing an application calling management method according to another embodiment.
Fig. 3 is a schematic diagram of a main interface.
Fig. 4 is a flow chart showing an application calling management method according to yet another embodiment.
Fig. 5 is a block diagram of an application calling management apparatus according to an embodiment not containing all of the features of the claimed invention.
Fig. 6 is a block diagram of an application calling management apparatus according to another embodiment.
Fig. 7 is a block diagram of an application calling management apparatus according to yet another embodiment.
Fig. 8 is a block diagram of an application calling management apparatus.
Fig. 9 is a block diagram of an application calling management apparatus.
Fig. 10 is a block diagram of an application calling management apparatus.
Fig. 11 is a schematic diagram of a terminal according to an embodiment not covered by the claimed invention.

The above drawings illustrate specific embodiments of the invention and embodiments not covered by the claimed invention which will be described in detail hereinafter. These drawings and description are not intended to limit the scope of the inventive concept in any way but to explain the concept of the invention to those skilled in the art by referring to the specific embodiments.

### DETAILED DESCRIPTION

Reference will now be made in detail to certain embodiments, examples of which are illustrated in the accompanying drawings. The following description refers to the accompanying drawings in which the same numbers in different figures represent the same or similar elements unless otherwise indicated. The implementations set forth in the following description of embodiments do not represent all implementations consistent with the invention. Instead, they are merely examples of devices and methods consistent with aspects related to the invention as recited in the appended claims.

Before describing how to implement this invention, a process for an application to call another application and start it in background is explained. The system program of a terminal provides an application in the terminal with a function of calling another application to start it in background. An application may send a background calling message to the system program. After receiving the background calling message, the system program may start an application corresponding to the background calling message in background, namely, start the application and run the same in background.

Each step of the methods of the embodiments of this invention is executed by a terminal. The system program of the terminal may be an Android system program. The terminal may be any terminal supporting installation of applications, such as a smart phone, a tablet computer or any other mobile terminal. The terminal may be provided with a processor, a memory, a transceiver and the like. The processor may be configured to manage callings of applications. The memory may store data required and generated in the following processes. The transceiver may receive and send messages. The terminal may also be provided with input/output devices, such as a screen. The screen may display interfaces (such as a setting interface) and may be a touch screen. In the embodiments of this invention, solutions are described in detail by taking a case where the terminal is a handset and the system program is an Android system program as an example. The implementation in other cases is similar to the implementation in the exemplary case and will not be described here redundantly.

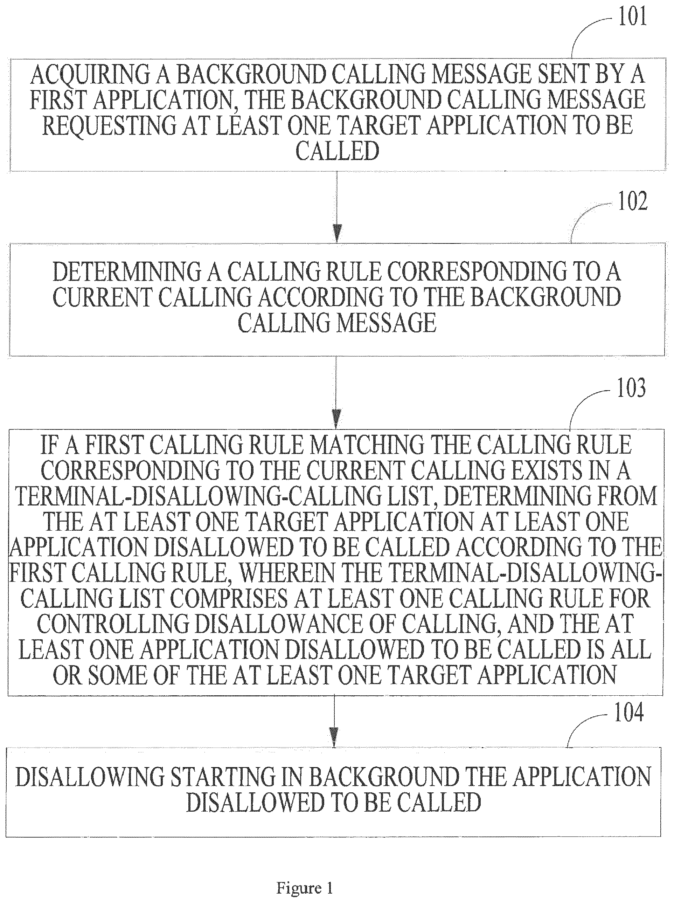

Fig. 1 is a flow chart showing an application calling management method according to an embodiment not containing all of the steps according to the claimed invention. The process of this method includes the following steps.

In step 101, a background calling message sent by a first application is acquired. The background calling message requests at least one target application to be called.

In step 102, a calling rule corresponding to the current calling is determined according to the background calling message.

In step 103, if a first calling rule matching the calling rule corresponding to the current calling exists in a terminal-disallowing-calling list, at least one application disallowed to be called is determined from the at least one target application according to the first calling rule. The terminal-disallowing-calling list comprises at least one calling rule for controlling disallowance of calling, and the at least one application disallowed to be called is all or some of the at least one target application.

In step 104, it is disallowed to start in background the application disallowed to be called.

To sum up, with the method provided by this embodiment, a calling rule corresponding to a current calling is determined according to a background calling message; if a first calling rule matching the calling rule corresponding to the current calling exists in a terminal-disallowing-calling list, at least one application disallowed to be called is determined from the at least one target program according to the first calling rule; and it is disallowed to start in background the application disallowed to be called. In this way, when the first application calls and starts in background other applications, the system program can disallow starting in background some application(s) based on the terminal-disallowing-calling list. Thus, the power consumption of the terminal can be reduced.

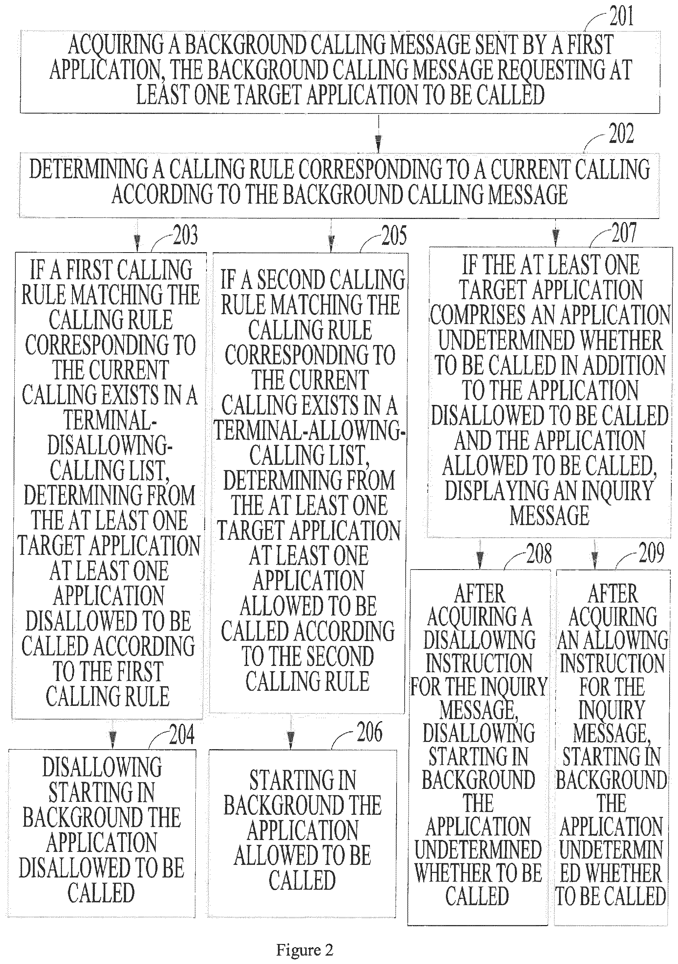

Fig. 2 is a flow chart showing an application calling management method according to another embodiment. The process of this method incudes the following steps.

In step 201, a background calling message sent by a first application is acquired. The background calling message requests at least one target application to be called.

The first application is installed in a terminal. After being started (in background or foreground) and run, the first application may send the background calling message to a system program which may be an application on a Framework layer of the terminal. The first application may be started in foreground when being opened by a user or in background when being called by another application. The background calling message may be sent in any of four calling types including Start activity, Send broadcast, Start service (bind service) and Get content provider, and is configured to request the target application to be called.

In a possible implementation, the background calling message carries an application identification for indicating a target application requested by the first application to be called. Optionally, the background calling message further carries a target class name, which indicates a class of the target application requested by the first application to be called. For example, if the application identification carried by the background calling message is a package name "Com.test.b" of the application and the target class name carried by the background calling message is "Com.test.push.sdk.PUshService", it means that the first application requests a target application whose package name is "Com.test.b" and whose class name is "Com.test.push.sdk.PUshService" to be called.

In a possible implementation, the background calling message carries target operation information (namely, action) which indicates a called operation. Among applications installed in the terminal, an application, supporting an operation corresponding to the target operation information, is the target application requested by the first application to be called. In an example, if the target operation information carried by the background calling message is "Com.text.SEND_MESSAGE" which indicates that the called operation is message sending, it means that the first application requests all applications capable of performing message sending to be called among the applications installed in the terminal. Among the applications installed in the terminal, there may be one or more applications capable of performing message sending.

In step 202, a calling rule corresponding to a current calling is determined according to the background calling message.

The calling rule corresponding to the current calling comprises at least one of a caller, a callee as required by the claimed invention, a called operation (namely, an action), a called class name and a calling type.
1) If the calling rule corresponding to the current calling comprises a caller for the current calling, the terminal may determine the caller for the current calling by determining the first application sending the background calling message as the caller for the current calling. For example, if a package name of the first application is "Com.test.a", the caller for the current calling is the application whose package name is "Com.test.a".
2) If the calling rule corresponding to the current calling comprises a callee for the current calling, as required by the claimed invention, the terminal determines the callee for the current calling according to the following implementations.

In a possible implementation, the terminal acquires an application identification carried by the background calling message, and determines a target application indicated by the application identification as the callee for the current calling. For example, if package names of applications carried by the background calling message are "Com.test.b" and "Com.test.c", callees for the current calling are two applications whose package names are "Com.test.b" and "Com.test.c" respectively.

In another possible embodiment, the terminal acquires target operation information carried by the background calling message, and determines among locally installed applications a target application supporting an operation corresponding to the target operation information as the callee for the current calling. For example, if the target operation information carried by the background calling message is "Com.text.SENDMESSAGE" and, among the applications locally installed in the terminal, applications capable of performing message sending include applications A and B, then callees for the current calling are applications A and B.

3) If the calling rule corresponding to the current calling comprises a called operation for the current calling, the terminal may determine the called operation for the current calling by acquiring target operation information carried by the background calling message and determining an operation corresponding to the target operation information as the called operation for the current calling. For example, if the target operation information carried by the background calling message is "Com.text.SEND_MESSAGE", the called operation for the current calling is message sending.

4) If the calling rule corresponding to the current calling comprises a called class name for the current calling, the terminal may determine the called class name for the current calling by acquiring a target class name carried by the background calling message and determining the target class name as the called class name for the current calling. For example, if the target class name carried by the background calling message is "Com.test.push.sdk.PUshService", the called class name for the current calling is "Com.test.push.sdk.PUshService".

5) If the calling rule corresponding to the current calling comprises a current calling type, the terminal may determine the calling type for the current calling by determining a target calling type adopted by the first application for sending the background calling message as the calling type for the current calling. As described above, a caller may adopt any of four calling types including Start activity, Send broadcast, Start service (bind service) and Get content provider to send the background calling message. If the target calling type adopted by the first application for sending the background calling message is Start activity, the calling type for the current calling is Start activity.

The terminal may extract one or more of a caller, a callee as required by the claimed invention, a called operation, a called class name and a calling type according to information carried by the background calling message, to determine a calling rule corresponding to the current calling. In an example, if the calling rule corresponding to the current calling comprises the caller "Com.test.a", the callee "Com.test.b", the called class name "Com.test.push.sdk.PUshService" and the calling type "Start service". In another example, the calling rule corresponding to the current calling comprises the called operation "Com.text.SEND _MESSAGE" and the calling type "Send broadcast".

In the present embodiment, the terminal stores a terminal-disallowing-calling list including at least one calling rule for controlling disallowance of calling. The terminal disallows performing a calling process which conforms to a calling rule included in the terminal-disallowing-calling list. Optionally, the terminal also stores a terminal-allowing-calling list including at least one calling rule for controlling allowance of calling. The terminal allows performing a calling process which conforms to a calling rule included in the terminal-allowing-calling list.

Taking a terminal-disallowing-calling list as an example, calling rules included in the terminal-disallowing-calling list may be as shown in Table 1.

**Table 1**

| Caller Package Name | Callee Package Name | Called class name | Called operation (action) | Calling type |
|---|---|---|---|---|
| Com.test.a | Com.test.b | Com.test.push.sd k.PU shService | ^{∗} | Start service |
| ^{∗} | Com.test.a | Com.test.push.sd k.PU shService | ^{∗} | Start service |
| ^{∗} | ^{∗} | ^{∗} | Com.text.SEND_ MESSAGE | Start service |
| * | * | * | android.net.conn. CONNECTIVIT Y_CHANGE | * |
| Com.text.a | Com.test.b | Com.test.push.sd k | * | * |

In Table 1, "^{∗}" represents a wildcard to enable a calling rule to cover as many calling relations as possible, so that the number of calling rules required to be included in a terminal-disallowing-calling list is reduced, thereby facilitating saving storage resources of the terminal. Taking the third calling rule shown in Table 1 as an example, as long as its called operation is "Com.text.SEND_MESSAGE" and its adopted calling type is "Send broadcast", any calling process will conform to the calling rule, regardless of its caller, callee and called class name. In addition, for calling rules included in a terminal-allowing-calling list, reference may be made to the above Table 1.

After the calling rule corresponding to the current calling is determined, it is detected whether a first calling rule matching the calling rule corresponding to the current calling exists in the terminal-disallowing-calling list, and it is detected whether a second calling rule matching the calling rule corresponding to the current calling exists in the terminal-allowing-calling list. In the present embodiment, the order for performing the two detection steps will not be limited. Optionally, the terminal first detects whether a second calling rule matching the calling rule corresponding to the current calling exists in the terminal-allowing-calling list to ensure that a calling process allowed to be performed is performed earlier.

In step 203, if a first calling rule matching the calling rule corresponding to the current calling exists in a terminal-disallowing-calling list, at least one application disallowed to be called is determined from the at least one target application according to the first calling rule.

For example, the calling rule corresponding to the current calling comprises a caller "Com.test.a", a callee "Com.test.b", a called class name "Com.test.push.sdk.PUshService" and the calling type "Start service". If calling rules included in the terminal-disallowing-calling list are as shown in Table 1, then the first calling rule in the terminal-disallowing-calling list matches the calling rule for the current calling, and the terminal determines the application whose package name is "Com.test.b" as an application disallowed to be called.

In addition, the at least one application disallowed to be called is all or some of the at least one target application. For example, the calling rule corresponding to the current calling comprises the caller "Com.test.a", the callees "Com.test.b" and "Com.test.c", the called class name "Com.test.push.sdk.PUshService" and the calling type "Start service". The at least one target application requested by the first application to be called comprises two applications whose package names are "Com.test.b" and "Com.test.c". The application whose package name is "Com.test.b" is an application disallowed to be called, and the application whose package name is "Com.test.b" is not an application disallowed to be called.

In step 204, it is disallowed to start in background the application disallowed to be called.

In step 205, if a second calling rule matching the calling rule corresponding to the current calling exists in a terminal-allowing-calling list, at least one application allowed to be called is determined from at least one target application according to the second calling rule.

For example, the calling rule corresponding to the current calling comprises a called operation "Com.text.SEND_MESSAGE" and a calling type "Send broadcast". If the terminal-allowing-calling list comprises the third calling rule as shown in Table 1 and, among the applications locally installed in the terminal, application capable of performing message sending include applications A and B, then the terminal determines that the applications A and B are applications allowed to be called.

In addition, the at least one application allowed to be called is all or some of the at least one target application. For example, the calling rule corresponding to the current calling comprises a called operation "Com.text.SEND_MESSAGE" and a calling type "Send broadcast". In the terminal-allowing-calling list, the second calling rule matching the calling rule corresponding to the current calling comprises a callee "application A", a callee operation "Com.text.SEND_MESSAGE" and a calling type "Send broadcast". Still assuming that, among the applications locally installed in the terminal, applications capable of performing message sending include applications A and B, then the terminal determines that the application A is an application allowed to be called, and the application B is not an application allowed to be called.

In step 206, the application allowed to be called is started in background.

Optionally, the method provided by the present embodiment further comprises steps 207-209.

In step 207, if the at least one target application further comprises an application undetermined whether to be called in addition to the application disallowed to be called and the application allowed to be called, an inquiry message is displayed.

The inquiry message is used for inquiring a user whether the application undetermined whether to be called is allowed to be called. For example, the at least one target application comprises applications A, B and C. The applications A and B are applications disallowed to be called, while the application C is neither an application disallowed to be called nor an application allowed to be called. Then, the terminal determines that the application C is an application undetermined whether to be called and displays the inquiry message used for inquiring the user whether the application C is allowed to be called. For instance, the inquiry message may be "The first application attempts to start the application C. Allow or not allow?"

The user may trigger a disallowing instruction or an allowing instruction according to the inquiry message displayed by the terminal.

In step 208, after a disallowing instruction for the inquiry message is acquired, it is disallowed to start in background the application undetermined whether to be called.

In step 209, after an allowing instruction for the inquiry message is acquired, the application undetermined whether to be called is started in background.

In conclusion, according to the method provided by the present embodiment, a calling rule corresponding to a current calling is determined according to the background calling message; if a first calling rule matching the calling rule corresponding to the current calling exists in a terminal-disallowing-calling list, at least one application disallowed to be called is determined from at least one target application according to the first calling rule; and it is disallowed to start in background the application disallowed to be called. In this way, when the first application calls and starts other applications in background, the system program can disallow starting some application(s) in background based on the terminal-disallowing-calling list. Thus, the power consumption of the terminal can be reduced.

In addition, by setting a terminal-allowing-calling list, if a second calling rule matching the calling rule corresponding to the current calling exists in the terminal-allowing-calling list, an application allowed to be called is determined from the at least one target application according to the second calling rule, and is started in background. As such, it is ensured that some applications allowed to be called can be called normally.

Furthermore, if the at least one target application further comprises an application undetermined whether to be called in addition to the application disallowed to be called and the application allowed to be called, an inquiry message is displayed for inquiring a user whether the application undetermined whether to be called is allowed to be called, so that the user can autonomously determine whether to allow the application undetermined whether to be called to be called. Thus, calling between applications cannot be performed without permission by the system or user, thereby improving the security.

There are the following problems if an application is called in background without control: 1) security risks, caused by the fact that, after being called and started in background, the application may perform a series of operations which affect the security, such as reading the user's privacy, positioning, acquiring a payment password or screen recording; 2) power consumption, caused by the fact that, after being started and run in background, the application will consume power (which may be in large amount, especially when functions of positioning, screen recording, sound recording and the like are enabled) resulting in shorter standby time of the terminal and discharge of heat from the device; 3) memory space occupation, caused by the fact that, after being started and run in background, the application will occupy the memory space, resulting in such problems for the terminal as insufficient memory and standstill; and 4) too much pushed messages, caused by the fact that pushed messages may be sent after the application is started and run in background. With the technical solutions provided by the present embodiment, all applications cannot be called without permission by the system or user, so that the above problems may be effectively solved. That is, the terminal's power consumption and memory space occupation can be reduced, the terminal's standby time is prolonged, heat discharged from the device is reduced, the number of pushed messages is reduced, and security is improved.

Embodiments of the present invention also provide a method for a terminal to acquire a terminal-disallowing-calling list and a terminal-allowing-calling list. The method may include processes 1 and 2.

In process 1, a list acquiring request is sent to a server.

The list acquiring request includes identifications of applications locally installed in the terminal. The server is configured to acquire calling rules related to the applications locally installed in the terminal from a general calling disallowance list to obtain the terminal-disallowing-calling list, and to acquire calling rules related to the applications locally installed in the terminal from a general calling allowance list to obtain the terminal-allowing-calling list.

In implementation, a technician can collect all applications supported by the Android system. Each terminal enabling a synchronization function may send calling relationships among installed applications to a network server (which is set by the technician to store general calling disallowance lists and general calling allowance lists for applications, and may be shortly referred to as a server). Then the technician sorts out and analyzes the calling relationships sent by all the terminals to obtain the general calling disallowance lists and the general calling allowance lists and stores them in the server. For example, for callings that may have potential security risks and callings that only serve to push messages to improve the survival rate of some applications, the technician can extract calling rules from such calling relationships and add these calling rules to the general calling disallowance list. As another example, for normal mutual callings among some applications, such as calling relationships of payment, sharing and authorized login, the technician can extract calling rules from such calling relationships and add these calling rules to the general calling allowance list.

The terminal may send identifications of all applications installed therein to the server. After receiving the application identifications, the server acquires calling rules related to the applications locally installed in the terminal from the general calling disallowance list to obtain the terminal-disallowing-calling list, or acquires calling rules related to the applications locally installed in the terminal from a general calling allowance list to obtain the terminal-allowing-calling list. Then, the server sends the terminal-disallowing-list and the terminal-allowing-calling list to the terminal.

In process 2, the terminal-disallowing-calling list and the terminal-allowing-calling list sent by the server are received.

After receiving the terminal-disallowing-calling list and the terminal-allowing-calling list sent by the server, the terminal stores the same.

Considering that there are already abundant applications on the Android platform and there are millions of calling relationships among the applications, sending calling rules related to the applications locally installed in the terminal to the terminal instead of directly sending the general calling disallowance list and the general calling allowance list to the terminal is conducive to saving the storage resource of the terminal and improving the matching efficiency of the calling rules.

In addition, embodiments of the present invention not covered by the claimed invention also provide a method for a terminal to update a terminal-disallowing-calling list and a terminal-allowing-calling list. The method may include other processes 1 and 2.

In process 1, when a preset list updating condition is met, a list updating request is sent to a server.

The list updating request carries identifications of all applications currently installed in the terminal. The server is configured to acquire calling rules related to the applications locally installed in the terminal from a general calling disallowance list to obtain the terminal-disallowing-calling list, and to acquire calling rules related to the applications locally installed in the terminal from a general calling allowance list to obtain the terminal-allowing-calling list.

In process 2, the terminal-disallowing-calling list and the terminal-allowing-calling list sent by the server are received to replace original stored ones.

There are two preset list updating conditions, namely, when a new application is installed in the terminal and whenever a predetermined time period elapses. In the following, these conditions will be described in detail.

In implementation, when a user installs a new third application in the terminal, the terminal may send a list updating request to the server after detecting the locally installed third application. The list updating request carries identifications of all applications currently installed in the terminal. After receiving the list updating request sent from the terminal, the server derives the identifications of all the applications currently installed in the terminal from the list updating request, acquires calling rules related to the applications locally installed in the terminal from a pre-stored general calling disallowance list to obtain a terminal-disallowing-calling list and calling rules related to the applications locally installed in the terminal from a pre-stored general calling allowance list to obtain a terminal-allowing-calling list, and sends the terminal-disallowing-list and the terminal-allowing-calling list to the terminal. After receiving the terminal-disallowing-calling list and the terminal-allowing-calling list sent by the server, the terminal stores the new received lists to replace originals ones.

Alternatively, the technician can set a certain time period (a predetermined periodicity), and stores it in the terminal. The terminal may send a list updating request to the server at the predetermined periodicity (e.g., every one week, two weeks, etc.) The list updating request carries identifications of all applications currently installed in the terminal. After receiving the list updating request sent by the terminal, the server performs the above-described operations.

The terminal regularly updating the terminal-disallowing-calling list and the terminal-allowing-calling list from the server is conducive to reducing the number of times for a user to choose whether to allow calling, thereby simplifying the user's operations and improving the user experience.

Embodiments of the present invention also provide a method for a user to modify authorization of the first application to call another application. The method may include other processes 1 and 2.

In process 1, at least one calling disallowance rule related to the first application is displayed.

In an example, each calling disallowance rule related to the first application comprises an application disallowed to be called by the first application.

In process 2, when a calling authorization instruction corresponding to a target calling disallowance rule is acquired, the target calling disallowance rule is deleted from the terminal-disallowing-calling list, and is added into the terminal-allowing-calling list as a calling allowance rule.

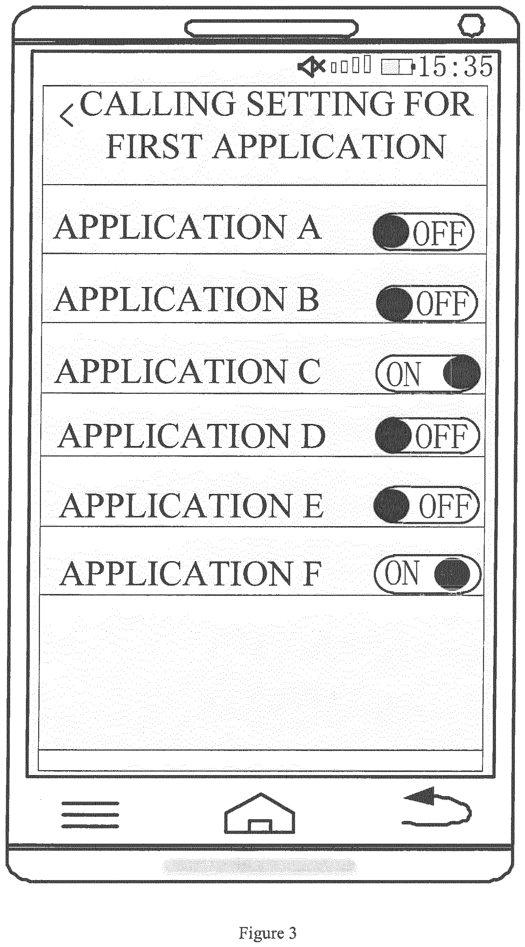

The target calling disallowance rule is one of at least one calling disallowance rule related to the first application. In implementation, the technician may enable application calling settings for all applications installed in the terminal to be displayed in settings of the terminal. For example, Figure 3 illustrates application calling settings for the first application. If a user wants to modify the authorization of the first application to call other applications, he/she may click the on /off option. The on option is used for triggering authorization of the first application to call another application, and the off option is used for disabling authorization of the first application to call another application.

If the user wants to enable the first application to call a second application and start it in background, he/she may switch the on/off option for the second application in the application calling setting for the first application from the off option to the on option. Thus, when detecting a calling authorization instruction input by the user for authorizing the first application to call the second application, the terminal can modify the terminal-disallowing-calling list and the terminal-allowing-calling list, so that the first application may call the second application and start it in background.

Similarly, embodiments of the present invention also provide a method for a user to modify prohibition of the first application from calling another application. The method may include processes 1 and 2.

In process 1, at least one calling allowance rule related to the first application is displayed.

In an example, each calling allowance rule related to the first application comprises an application allowed to be called by the first application.

In process 2, when a calling prohibition instruction corresponding to a target calling allowance rule is acquired, the target calling allowance rule is deleted from the terminal-allowing-calling list, and is added into the terminal-disallowing-calling list as a calling disallowance rule.

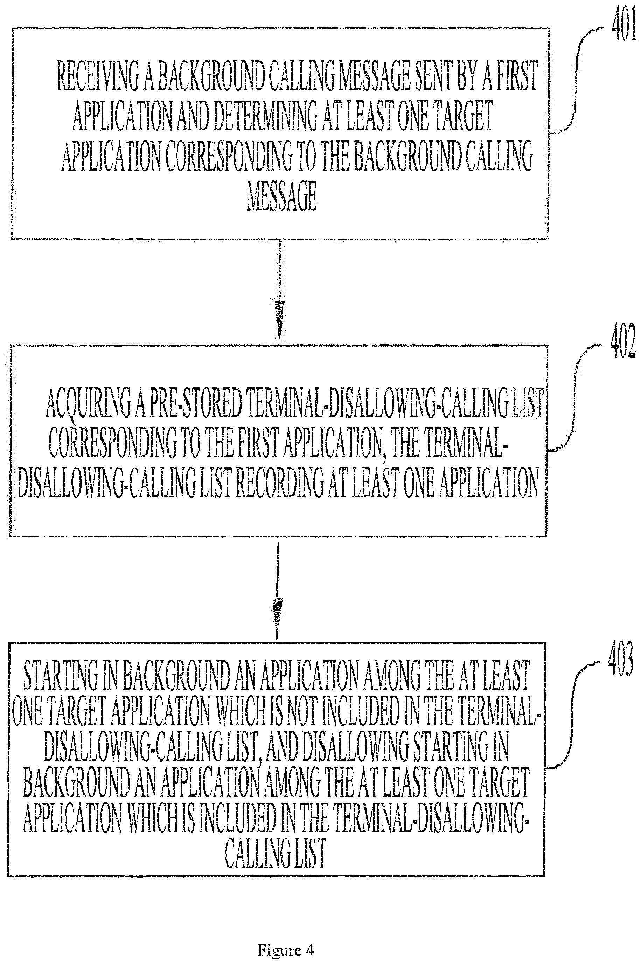

Fig. 4 is a flow chart showing an application calling management method according to another exemplary embodiment. The processing flow of the method comprises the following steps.

In step 401, a background calling message sent by a first application is received, and at least one target application corresponding to the background calling message is determined.

In implementation, the first application is installed in a terminal. After being started (in background or in foreground), the first application may send a background calling message to a system program. The first application may be started in foreground when being opened by a user or in background when being called by another application. The background calling message may be sent in any of four calling types including Start activity, Send broadcast, Start service (bind service) and Get content provider. After receiving the background calling message sent by the first application, the system program can determine the target application corresponding to the background calling message based on an application identification or operation information carried by the background calling message, namely, determine all applications to be called by the first application requires.

if the background calling message carries the application identification, the step of determining the at least one target application comprises:
determining the target application corresponding to the application identification carried by the background calling message.

In implementation, when the first application sends the background calling message to the system program, an identification of an application to be called may be carried by the background calling message. After receiving the background calling message sent by the first application, the system program can derive from the background calling message its carried application identification. The target application is an application corresponding to the carried application identification.

If the background calling message carries target operation information, the step of determining the target application comprises: determining among locally installed applications an application supporting an operation corresponding to the target operation information as the target application.

The target operation information (namely, action) may be information specifying the target application performs a certain processing, or may be any string preset between a calling application and a called application.

In implementation, when the first application sends the background calling message to the system program, the target operation information may be carried by the background calling message. After receiving the background calling message, the system program can determine among locally installed applications a target application supporting an operation corresponding to the target operation information, namely, a target application capable of receiving the target operation information.

In step 402, a pre-stored terminal-disallowing-calling list corresponding to the first application is acquired. The terminal-disallowing-calling list records at least one application.

In implementation, a technician can collect all applications supported by the Android system. Each terminal enabling a synchronization function may send calling relationships among installed applications to a network server (which is set by the technician to store general calling disallowance lists for applications, and may be shortly referred to as a server). Then the technician determines the general calling disallowance list corresponding to each application according to calling relationships sent by all terminals, and stores the general calling disallowance lists in the server. The general calling disallowance list corresponding to each application may comprise calling applications and called applications. Each terminal may send identifications of all applications installed therein to the server. After receiving the application identifications sent by the terminal, the server may determine, from the general calling disallowance lists, matched terminal-disallowing-calling lists for all applications installed in the terminal, and send the matched terminal-disallowing-calling list to the terminal. After receiving the terminal-disallowing-calling lists for all installed applications, the terminal stores the lists.

As shown in Table 2, a terminal-disallowing-calling list corresponding to the first application comprises all applications that cannot be called by the first application to be started in background. If the first application is the Xiaomi store application, the terminal-disallowing-calling list corresponding to the Xiaomi store application comprises applications A, B, C and the like.

After determining a target application corresponding to the background calling message, the system program can acquire from the terminal a pre-stored terminal-disallowing-calling list corresponding to the first application according to an identification of the first application.

**Table 2 Terminal-disallowing-calling list for First Application**

| Application | Applications disallowed to be called |
|---|---|
| Xiaomi shore | Application A |
| | Application B |
| | Application C |
| | ...... |

Optionally, the terminal-disallowing-calling list may further comprise a calling type, and a corresponding process may be as follows.

A target calling type corresponding to the background calling message is determined; and the pre-stored terminal-disallowing-calling list corresponding to both the first application and the target calling type is acquired, and the terminal-disallowing-calling list recording at least one application.

The calling type may be Start activity, Send broadcast, Start service (bind Service) or Get content provider.

In implementation, since different calling types adopt different operation information, a technician can set a terminal-disallowing-calling list corresponding to each calling type when setting operation information corresponding to called applications in a general calling disallowance list in the server, and store the terminal-disallowing-calling list in the server. Each terminal may acquire from the server terminal-disallowing-calling lists corresponding to calling types for each application installed therein, and store the terminal-disallowing-calling lists. As such, a terminal-disallowing-calling list corresponding to a calling type can be found if there are various calling types, and then applications disallowed to be called in background can be determined, without having to find them from a mixed terminal-disallowing-calling list for four calling types, thus improving the efficiency for determining the applications disallowed to be started in background.

After receiving the background calling message, the system program of the terminal may determine a target calling type corresponding to the background calling message, and then acquire a pre-stored terminal-disallowing-calling list corresponding to both the first application and the target calling type.

In step 403, an application among the at least one target application which is not included in the terminal-disallowing-calling list is started in background, and it is disallowed to start in background an application among the at least one target application which is included in the terminal-disallowing-calling list.

In implementation, the system program of the terminal may determine an application included in the terminal-disallowing-calling list and an application not included in the terminal-disallowing-calling list among target applications corresponding to the background calling message according to the terminal-disallowing-calling list corresponding to the first application, and then start in background the application not included in the terminal-disallowing-calling list and disallows starting in background the application included in the terminal-disallowing-calling list. For example, among the target applications, if the system program determines that the application A is included in the terminal-disallowing-calling list and the applications B and C are not included in the terminal-disallowing-calling list, the system program controls the applications B and C to be started in background and disallows starting in background the application A.

If the background calling message carries operation information (action) which may be referred to as target operation information, the terminal-disallowing-calling list records operation information corresponding to each of the at least one application. The step 403 may be implemented as: disallowing starting in background an application among the at least one target application which is included in the terminal-disallowing-calling list and whose corresponding operation information is the same as the target operation information.

For an application among the at least one target application which is included in the terminal-disallowing-calling list and whose corresponding operation information is different from the target operation information, it may be started in background.

The target operation information may be information specifying that the target application performs a certain processing, or may be any string preset between a calling application and a called application.

In implementation, a technician may add operation information corresponding to a called application in the general calling disallowance list corresponding to each application. Accordingly, the terminal-disallowing-calling lists for all installed applications, acquired by each terminal, also comprise operation information. The process of acquiring the terminal-disallowing-calling lists for all the installed applications by each terminal is the same as that of step 402, and will not be described in detail herein.

After receiving the background calling message sent by the first application, the system program of the terminal acquires target operation information carried by the message, and determines among the at least one target application applications which are included in the terminal-disallowing-calling list. Then, the system program compares the determined applications with the terminal-disallowing-calling list to check whether the operation information is the same as the target operation information. If no, an application whose operation information is different from the target application information is started in background; and if yes, it is disallowed to start in background an application whose operation information is the same as the target application information.

Optionally, if the terminal-disallowing-calling list comprises a called class name, step 403 may be implemented as: determining a target called class name corresponding to the background calling message; disallowing starting in background an application which is included in the terminal-disallowing-calling list and whose corresponding called class name is the same as the target called class name; and starting in background an application which is included in the terminal-disallowing-calling list and whose corresponding called class name is different from the target called class name.

The target called class name is a name of a function code in an application for performing an operation corresponding to the target operation information; and one called class name may correspond to several pieces of operation information. The technician may set one or more function codes for each application, and correspondingly definite the name (the called class name) of each function code.

In implementation, a technician may add a called class name corresponding to a called application in the general calling disallowance list corresponding to each application. Accordingly, the terminal-disallowing-calling lists for all installed applications, acquired by each terminal, also comprise called class names. The process of acquiring the terminal-disallowing-calling lists for all the installed applications by each terminal is the same as that of step 402, and will not be described in detail herein. The technician may preset corresponding relations between called class names and operation information, and stores the relations in the terminal.

After receiving the background calling message sent by the first application, if the background calling message carries operation information, the system program of the terminal can determine a called class name corresponding to the background calling message according to the pre-stored corresponding relations between called class names and operation information, and determine among the at least one target application applications which are included in the terminal-disallowing-calling list. Then, the system program compares the determined applications with the terminal-disallowing-calling list to check whether the called class name is the same as the target called class name. If no, an application whose called class name is different from the target called class name is started in background; and if yes, it is disallowed to start in background an application whose called class name is the same as the target called class name.

If the background calling message does not carry operation information, default operation information may be acquired. Then, a called class name corresponding to the background calling message is determined according to the pre-stored corresponding relations between called class names and operation information, and applications which are included in the terminal-disallowing-calling list are determined from the at least one target application. Then, the determined applications are compared with the terminal-disallowing-calling list to check whether the called class name is the same as the target called class name. If no, an application whose called class name is different from the target called class name is started in background; if yes, it is disallowed to start in background an application whose called class name is the same as the target called class name.

In addition, for a case where the terminal-disallowing-calling list comprises both operation information and a called class name, if a plurality of applications simultaneously send background calling messages to the system program of the terminal, the system program will receive large amount of operation information. Because the terminal-disallowing-calling list comprises the called class name, the system program can check whether a terminal called class name is the same as the target called class name. If no, an application whose called class name is different from the target called class name is started in background; if yes, it is disallowed to start in background an application whose called class name is the same as the target called class name. As such, there is no need to compare each operation information with the terminal-disallowing-calling list, thereby improving the efficiency for the system program to determine applications to be started in background and applications disallowed to be started in background.

Optionally, according to a target calling type corresponding to the background calling message, an application among the at least one target application which is not included in the terminal-disallowing-calling list is started in background, and it is disallowed to start an application among the at least one target application which is included in the terminal-disallowing-calling list. The target calling type is any one of Start activity, Send broadcast, Start service (bind service) and Get Content Provider.

In implementation, the target calling type may comprise one of Start activity, Send broadcast, Start service (bind service) and Get Content Provider. After receiving a background calling message sent by the first application, the system program may determine a calling type, determine a target application (according to a process similar to that of step 401), and then finds a terminal-disallowing-calling list corresponding to the first application. For different calling types, the system program starts in background an application among the at least one target application which is not included in the terminal-disallowing-calling list and then sends the target calling type to the application which is not included in the terminal-disallowing-calling list, and disallows starting in background an application among the at least one target application which is included in the terminal-disallowing-calling list.

In conclusion, according to the method provided by the present embodiment, at least one target application corresponding to a background calling message is determined by receiving the background calling message sent by the first application; a pre-stored terminal-disallowing-calling list corresponding to the first application is acquired, and the terminal-disallowing-calling list recording at least one application; an application among the at least one target application which is not included in the terminal-disallowing-calling list is started in background, and it is disallowed to start in background an application among the at least one target application which is included in the terminal-disallowing-calling list. In this way, when the first application calls and starts other applications in background, the system program can disallow starting some application(s) in background based on the terminal-disallowing-calling list. Thus, the power consumption of the terminal can be reduced.

It should be noted that, in the above-described embodiments shown in Fig. 4, description is just given by taking an example, in which calling rules in the general terminal-disallowing-calling list and the general terminal-allowing-calling list comprise callers and callees and in which respective terminal-disallowing-calling lists and respective terminal-allowing-calling lists are established for different callers. In this case, after determining a caller and a callee for the current calling according to the background calling message, the terminal can quickly determine a matched terminal-disallowing-calling list corresponding to the caller for the current calling, so as to determine an application disallowed to be called.

The following are apparatus embodiments of the present invention, which may be configured to perform the method embodiments of the present invention. For details that are not disclosed in the apparatus embodiments of the present invention, reference can be made to the method embodiments of the present invention.

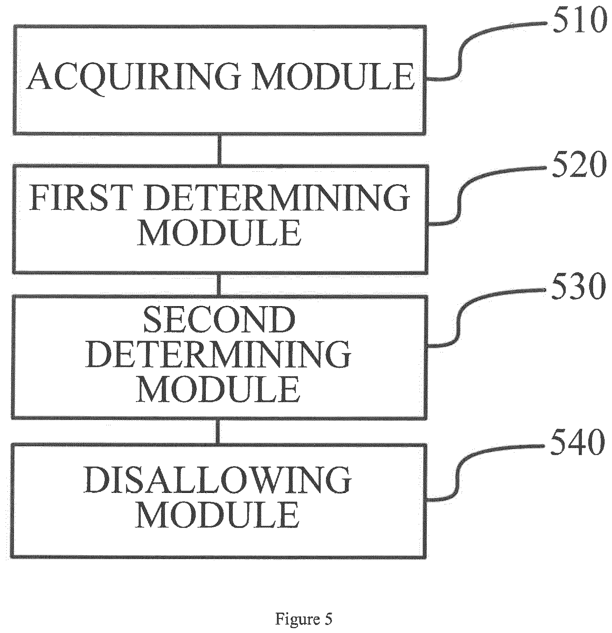

Fig. 5 is a block diagram of an application calling management apparatus according to an embodiment not containing all of the features required by the claimed invention. The apparatus is able to implement the above methods, and may be implemented by hardware or by hardware running corresponding software. The apparatus comprises: an acquiring module 510, a first determining module 520, a second determining module 530 and a disallowing module 540.

The acquiring module 510 is configured to acquire a background calling message sent by a first application, the background calling message requesting at least one target application to be called.

The first determining module 520 is configured to determine a calling rule corresponding to a current calling according to the background calling message.

The second determining module 530 is configured to, if a first calling rule matching the calling rule corresponding to the current calling exists in a terminal-disallowing-calling list, determine from the at least one target application at least one application disallowed to be called according to the first calling rule, wherein the terminal-disallowing-calling list comprises at least one calling rule for controlling disallowance of calling, and the at least one application disallowed to be called is all or some of the at least one target application.

The disallowing module 540 is configured to disallow starting in background the application disallowed to be called.

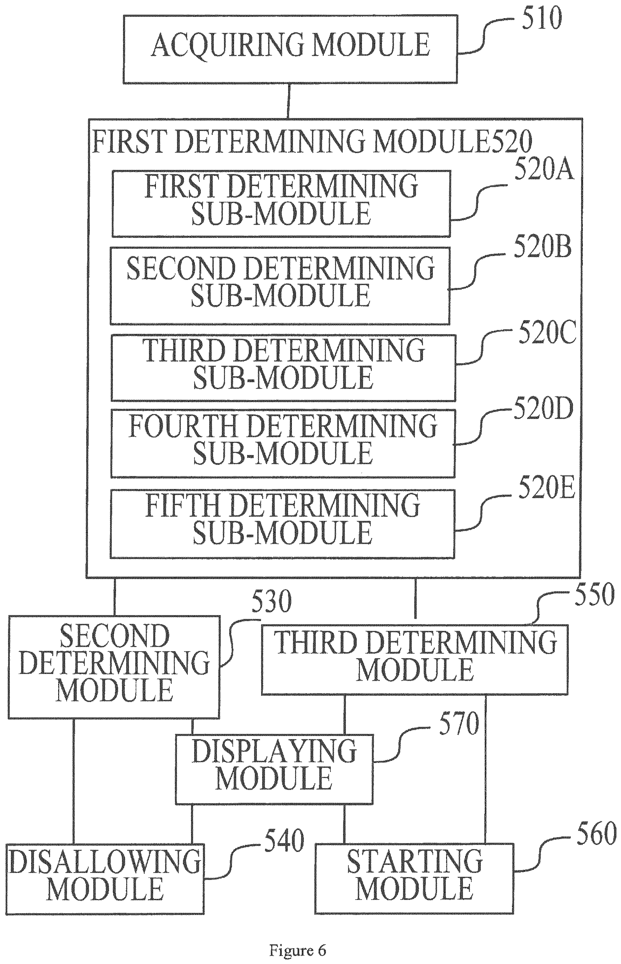

Optionally, as shown in Fig. 6, the apparatus may further comprise a third determining module 550 and a starting module 560.

The third determining module 550 is configured to, if a second calling rule matching the calling rule corresponding to the current calling exists in a terminal-allowing-calling list, determine from the at least one target application at least one application allowed to be called according to the second calling rule, wherein the terminal-allowing-calling list comprises at least one calling rule for controlling allowance of calling, and the at least one application allowed to be called is all or some of the at least one target application.

The starting module 560 is configured to start in background the application allowed to be called.

Optionally, as shown in Fig. 6, the apparatus may further comprise a displaying module 570.

The displaying module 570 is configured to, if the at least one target application comprises an application undetermined whether to be called in addition to the application disallowed to be called and the application allowed to be called, display an inquiry message for inquiring a user whether the application undetermined whether to be called is allowed to be called.

The disallowing module 540 is further configured to, after a disallowing instruction for the inquiry message is acquired, disallow starting in background the application undetermined whether to be called.

The disallowing module 540 is further configured to, after an allowing instruction for the inquiry message is acquired, start in background the application undetermined whether to be called.

Optionally, the calling rule comprises at least one of a caller, a callee as required by the claimed invention, a calling operation, a calling class name and a calling type.

Optionally, the calling rule corresponding to the current calling comprises a caller for the current calling.

As shown in Fig. 6, the first determining module 520 comprises a first determining sub-module 520a.

The first determining sub-module 520a is configured to determine the first application which sends the background calling message as the caller for the current calling.

According to the claimed invention, the calling rule corresponding to the current calling comprises a callee for the current calling.

As shown in Fig. 6, the first determining module 520 comprises a second determining sub-module 520b.

The second determining sub-module 520b is configured to acquire an application identification carried by the background calling message, and determine a target application indicated by the application identification as the callee for the current calling.

Or the second determining sub-module 520b is configured to acquire target operation information carried by the background calling message, and determine among locally installed applications a target application, which supports an operation corresponding to the target operation information, as the callee for the current calling.

Optionally, the calling rule corresponding to the current calling comprises a called operation for the current calling.

As shown in Fig. 6, the first determining module 520 comprises a third determining sub-module 530c.

The third determining sub-module 530c is configured to acquire target operation information carried by the background calling message, and to determine an operation corresponding to the target operation information as the called operation for the current calling.

Optionally, the calling rule corresponding to the current calling comprises a called class name for the current calling.

As shown in Fig. 6, the first determining module 520 comprises a fourth determining sub-module 520d.

The fourth determining sub-module 520d is configured to acquire a target class name carried by the background calling message, and to determine the target class name as the called class name for the current calling.

Optionally, the calling rule corresponding to the current calling comprises a calling type for the current calling.

As shown in Fig. 6, the first determining module 520 comprises a fifth determining sub-module 520e.

The fifth determining sub-module 520e is configured to determine a target calling type adopted by the first application for sending the background calling message as the calling type for the current calling.

Optionally, the apparatus further comprises a sending module and a receiving module.

The sending module is configured to send a list acquiring request to a server, wherein the list acquiring request includes identifications of locally installed applications, and the server is configured to acquire calling rules related to the locally installed applications from a general calling disallowance list to obtain the terminal-disallowing-calling list, and to acquire calling rules related to the locally installed applications from a general calling allowance list to obtain the terminal-allowing-calling list.

The receiving module is configured to receive the terminal-disallowing-calling list and the terminal-allowing-calling list sent by the server.

Optionally, the apparatus further comprises an authorizing module and/or a prohibiting module.

The authorizing module is configured to display at least one calling disallowance rule related to the first application, to delete a target calling disallowance rule from the terminal-disallowing-calling list when a calling authorization instruction corresponding to the target calling disallowance rule is acquired, and to add the target calling disallowance rule into the terminal-allowing-calling list as a calling allowance rule.

The prohibiting module is configured to display at least one calling allowance rule related to the first application, to delete a target calling allowance rule from the terminal-allowing-calling list when a calling prohibition instruction corresponding to the target calling allowance rule is acquired, and to add the target calling allowance rule into the terminal-disallowing-calling list as a calling disallowance rule.

To sum up, with the apparatus provided by this embodiment, a calling rule corresponding to the current calling according to a background calling message is determined; if a first calling rule matching the calling rule corresponding to the current calling exists in a terminal-disallowing-calling list, an application disallowed to be called is determined from at least one target application according to the first calling rule; and it is disallowed to start in background the application disallowed to be called. In this way, when the first application calls and starts in background other applications, the system program can disallow starting in background some application(s) based on the terminal-disallowing-calling list. Thus, the power consumption of the terminal can be reduced.

In addition, by setting a terminal-allowing-calling list, if a second calling rule matching the calling rule corresponding to the current calling exists in the terminal-allowing-calling list, an application allowed to be called is determined from the at least one target application according to the second calling rule, and is started in background. As such, normal calling of some applications allowed to be called is ensured.

Furthermore, if the at least one target application further comprises an application undetermined whether to be called in addition to the application disallowed to be called and the application allowed to be called, an inquiry message is displayed for inquiring a user whether the application undetermined whether to be called is allowed to be called, so that the user can autonomously determine whether to allow the application undetermined whether to be called to be called. Thus, calling between applications cannot be performed without permission by the system or user, thereby improving the security.

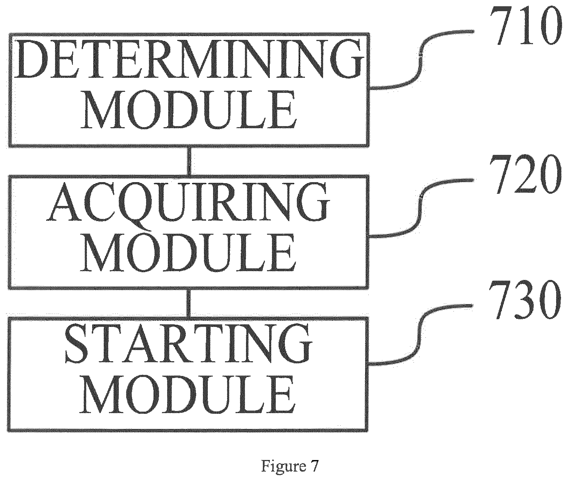

Fig. 7 is a block diagram of an application calling management apparatus according to yet another embodiment. The apparatus is able to implement the above methods, and may be implemented by hardware or by hardware running corresponding software. The apparatus comprises: a determining module 710, an acquiring module 720 and a starting module 730.

The determining module 710 is configured to receive a background calling message sent by a first application and determine at last one target application corresponding to the background calling message.

The acquiring module 720 is configured to acquire a pre-stored terminal-disallowing-calling list corresponding to the first application, the terminal-disallowing-calling list recording at least one application.

The starting module 730 is configured to start in background an application among the at least one target application which is not included in the terminal-disallowing-calling list, and to disallow starting in background an application among the at least one target application which is included in the terminal-disallowing-calling list.

According to a first alternative, the background calling message carries an application identification; and the determining module 710 is configured to determine a target application corresponding to the application identification carried by the background calling message.

According to a second alternative, the background calling message carries target operation information; and the determining module 710 is configured to determine among locally installed applications a target application supporting an operation corresponding to the target operation information.

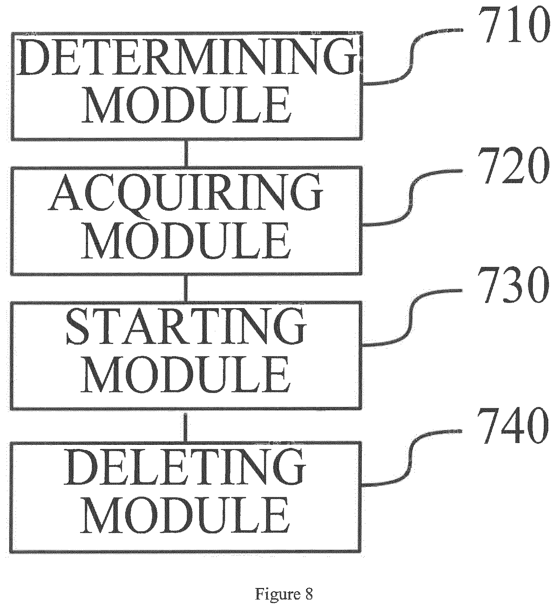

Optionally, as shown in Fig. 8, the apparatus may further comprise a deleting module 740 configured to, when a calling authorization instruction input by a user for authorizing the first application to call a second application is received, delete the second application from the terminal-disallowing-calling list.

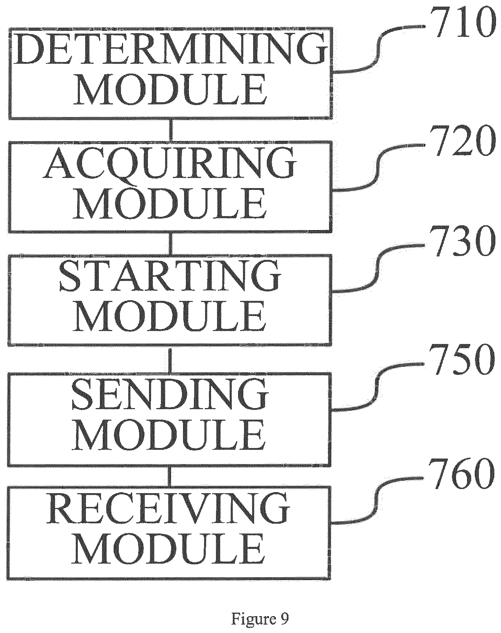

Optionally and not covered by the claimed invention, as shown in Fig. 9, the apparatus may further comprise a sending module 750 configured to, when a preset list updating condition is met, send a list updating request to a server, wherein the list updating request carries identifications of all applications currently installed in a terminal, so that the server acquires a stored general calling disallowance list corresponding to each of all installed applications, and creates a terminal-disallowing-calling list corresponding to each application based on applications installed in the terminal and included in the general calling disallowance list; and a receiving module 760 configured to receive from the server the terminal-disallowing-calling list corresponding to each application, and store the same.

Optionally, the background calling message carries target operation information, and the terminal-disallowing-calling list records operation information corresponding to each of the at least one application. The starting module 730 is configured to disallow starting in background an application among the at least one target application which is included in the terminal-disallowing-calling list and whose corresponding operation information is the same as the target operation information. The starting module 730 is further configured to start in background an application among the at least one target application which is included in the terminal-disallowing-calling list and whose corresponding operation information is different from the target operation information.

Optionally, the determining module 710 is further configured to determine a target calling class name corresponding to the background calling message. The starting module 730 is configured to disallow starting in background the application among the at least one target application which is included in the terminal-disallowing-calling list and whose corresponding calling class name is the same as the target calling class name. The starting module 730 is further configured to start in background an application among the at least one target application which is included in the terminal-disallowing-calling list and whose corresponding calling class name is different from the target calling class name.

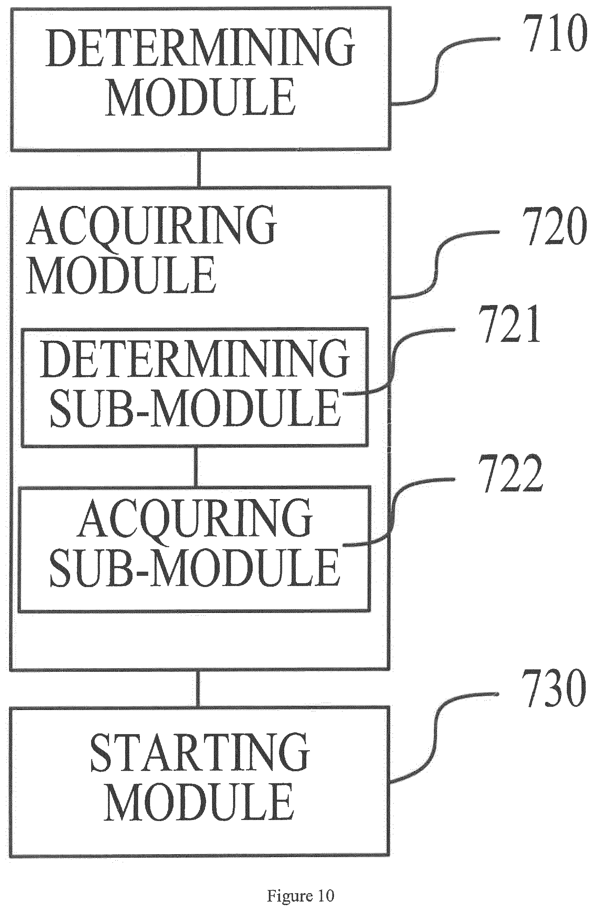

Optionally, as shown in Fig. 10, the acquiring module 720 comprises a determining sub-module 721 and an acquiring sub-module 722.

The determining sub-module 721 is configured to determine a target calling type corresponding to the background calling message.

The acquiring sub-module 722 is configured to acquire a pre-stored terminal-disallowing-calling list corresponding to both the first application and the target calling type, the terminal-disallowing-calling list recording at least one application.

Optionally, the background calling message carries calling type information, which includes any one of Start Activity, Send Broadcast, Start Service (bind Service) and Get Content Provider.

Optionally, the starting module 730 is configured to, according to the target calling type, start in background the application among the at least one target application which is not included in the terminal-disallowing-calling list, and disallow starting in background the application among the at least one target application which is included in the terminal-disallowing-calling list, the target calling type including any one of Start Activity, Send Broadcast, Start Service (bind Service) and Get Content Provider.

To sum up, with the apparatus provided by this embodiment, a background calling message sent by a first application is received, and a target application corresponding to the background calling message is determined; a pre-stored terminal-disallowing-calling list corresponding to the first application is acquired, the terminal-disallowing-calling list recording at least one application; and an application among the at least one target application which is not included in the terminal-disallowing-calling list is started in background, and it is disallowed to start in background an application among the at least one target application which is included in the terminal-disallowing-calling list. As such, when the first application calls and starts in background other applications, the system program can disallow starting some application(s) in background based on the terminal-disallowing-calling list. Thus, the power consumption of the terminal can be reduced.

It should be noted that: when application calling management is performed by using the application calling management apparatus provided by the above embodiments, the above division into respective functional modules is only given by way of example. In practical application, the above functions may be implemented by different functional modules as required; that is, the internal structure of the apparatus may be divided into different functional modules to realize all or part of the above functions. In addition, since the application calling management apparatus and the application calling management method provided by the above embodiments belong to the same concept, reference can be made to the method embodiments for the implementation of the apparatus, and the description thereof will be omitted here for simplicity.

An embodiment of this invention provides an application calling management apparatus, which can implement the above application calling management methods provided by this invention. The apparatus comprises: a processor; and a memory configured to store instructions executable by the processor, wherein this specific embodiment is not according to the claimed invention.

The processor is configured to: acquire a background calling message sent by a first application, the background call message requesting at least one target application to be called; determine a calling rule corresponding to a current calling according to the background calling message; if a first calling rule matching the calling rule corresponding to the current calling exists in a terminal-disallowing-calling list, determine from the at least one target application at least one application disallowed to be called according to the first calling rule, wherein the terminal-disallowing-calling list comprises at least one calling rule for controlling disallowance of calling, and the at least one application disallowed to be called is all or some of the at least one target application; and disallow starting in background the application disallowed to be called.

Optionally, the processor is further configured to: if a second calling rule matching the calling rule corresponding to the current calling exists in a terminal-allowing-calling list, determine from the at least one target application at least one application allowed to be called according to the second calling rule, wherein the terminal-allowing-calling list comprises at least one calling rule for controlling allowance of calling, and the at least one application allowed to be called is all or some of the at least one target application; and allow starting in background the application allowed to be called.

Optionally, the processor is further configured to: if the at least one target application comprises an application undetermined whether to be called in addition to the application disallowed to be called and the application allowed to be called, display an inquiry message for inquiring a user whether the application undetermined whether to be called is allowed to be called; after acquiring a disallowing instruction for the inquiry message, disallow starting in background the application undetermined whether to be called; after acquiring an allowing instruction for the inquiry message, start in background the application undetermined whether to be called.

Optionally, the calling rule comprises at least one of a caller, a callee, a calling operation, a calling class name and a calling type.

In one example, the calling rule corresponding to the current calling comprises a caller for the current calling. The processor is configured to: determine the first application which sends the background calling message as the caller for the current calling.

In yet another example, the calling rule corresponding to the current calling comprises a callee for the current calling. The processor is configured to: acquire an application identification carried by the background calling message, and determine a target application indicated by the application identification as the callee for the current calling; or acquire target operation information carried by the background calling message, and determine among locally installed applications a target application, which supports an operation corresponding to the target operation information, as the callee for the current calling.

In still another example, the calling rule corresponding to the current calling comprises a called operation for the current calling. The processor is configured to: acquire target operation information carried by the background calling message, and determine an operation corresponding to the target operation information as the called operation for the current calling.

In a further example, the calling rule corresponding to the current calling comprises a called class name for the current calling. The processor is configured to: acquire a target class name carried by the background calling message, and determine the target class name as the called class name for the current calling.

In yet a further example, the calling rule corresponding to the current calling comprises a calling type for the current calling. The processor is configured to: determine a target calling type adopted by the first application for sending the background calling message as the calling type for the current calling.

Optionally, the processor is further configured to: send a list acquiring request to a server, wherein the list acquiring request includes identifications of locally installed applications, and the server is configured to acquire calling rules related to the locally installed applications from a general calling disallowance list to obtain the terminal-disallowing-calling list, and to acquire calling rules related to the locally installed applications from a general calling allowance list to obtain the terminal-allowing-calling list; and receive the terminal-disallowing-calling list and the terminal-allowing-calling list sent by the server.

Optionally, the processor is further configured to: display at least one calling disallowance rule related to the first application; when acquiring a calling authorization instruction corresponding to a target calling disallowance rule, delete the target calling disallowance rule from the terminal-disallowing-calling list, and add the target calling disallowance rule into the terminal-allowing-calling list as a calling allowance rule; and/or display at least one calling allowance rule related to the first application; when acquiring a calling prohibition instruction corresponding to a target calling allowance rule, delete the target calling allowance rule from the terminal-allowing-calling list, and add the target calling allowance rule into the terminal-disallowing-calling list as a calling disallowance rule.

Another embodiment of this invention provides an application calling management apparatus, which can implement the above application calling management methods provided by this invention. The apparatus comprises: a processor; and a memory configured to store instructions executable by the processor, wherein this specific embodiment is not according to the claimed invention.

The processor is configured to: receive a background calling message sent by a first application and determine at least one target application corresponding to the background calling message; acquire a pre-stored terminal-disallowing-calling list corresponding to the first application, the terminal-disallowing-calling list recording at least one application; and start in background an application among the at least one target application which is not included in the terminal-disallowing-calling list, and disallow starting in background an application among the at least one target application which is included in the terminal-disallowing-calling list.

Optionally, the background calling message carries an application identification. The processor is configured to: determine a target application corresponding to the application identification carried by the background calling message.

Optionally, the background calling message carries target operation information. The processor is configured to: determine, among locally installed applications, a target application supporting an operation corresponding to the target operation information.

Optionally, the processor is further configured to: when receiving a calling authorization instruction input by a user for authorizing the first application to call a second application, delete the second application from the terminal-disallowing-calling list.

Optionally, the processor is further configured to: when a preset list updating condition is met, send a list updating request to a server, wherein the list updating request carries identifications of all applications currently installed in a terminal, so that the server acquires a stored general calling disallowance list corresponding to each of all installed applications, and creates a terminal-disallowing-calling list corresponding to each application based on the applications installed in the terminal and included in the respective general calling disallowance list; and receive from the server the terminal-disallowing-calling list corresponding to each application and store the same.

Optionally, the background calling message carries target operation information, and the terminal-disallowing-calling list records operation information corresponding to each of the at least one application. The processor is configured to: disallow starting in background an application among the at least one target application which is included in the terminal-disallowing-calling list and whose corresponding operation information is the same as the target operation information, and start in background the application among the at least one target application which is included in the terminal-disallowing-calling list and whose corresponding operation information is different from the target operation information.

Optionally, the processor is further configured to determine a target calling class name corresponding to the background calling message. The processor is configured to: disallow starting in background an application among the at least one target application which is included in the terminal-disallowing-calling list and whose corresponding calling class name is the same as the target calling class name; and start in background an application among the at least one target application which is included in the terminal-disallowing-calling list and whose corresponding calling class name is different from the target calling class name.

Optionally, the processor is further configured to: determine a target calling type corresponding to the background calling message; and acquire a pre-stored terminal-disallowing-calling list corresponding to both the first application and the target calling type, the terminal-disallowing-calling list recording at least one application.

Optionally, the processor is configured to: determine a target calling type corresponding to the background calling message; and according to the target calling type, start in background the application among the at least one target application which is not included in the terminal-disallowing-calling list, and disallow starting in background the application among the at least one target application which is included in the terminal-disallowing-calling list, the target calling type including any one of Start Activity, Send Broadcast, Start Service (bind Service) and Get Content Provider.

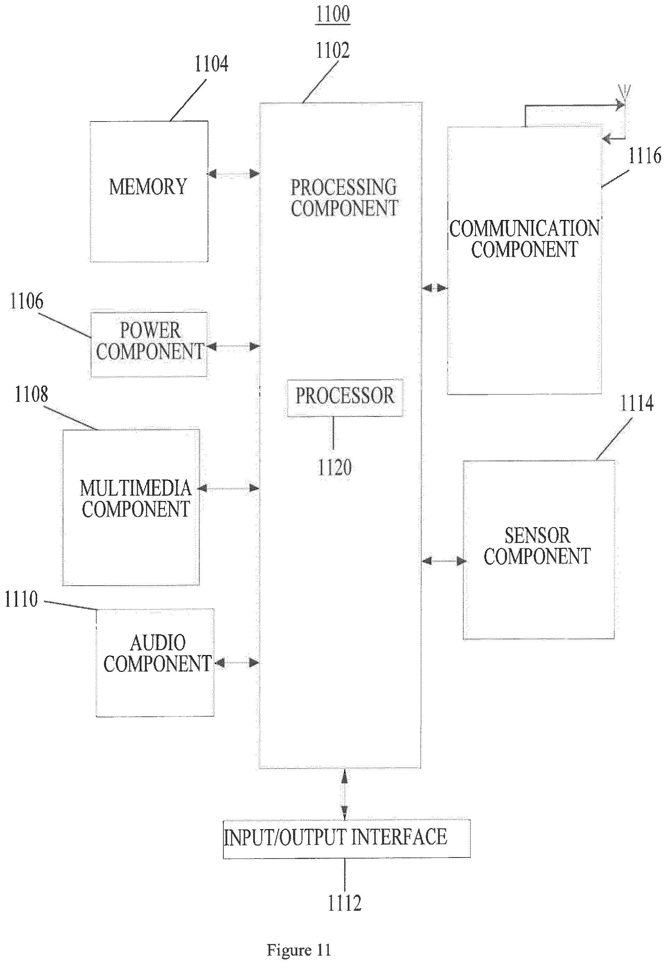

Fig. 11 illustrates a schematic diagram of a terminal according to an embodiment as such not covered by the claimed invention. The terminal may be a handset or the like.

Referring to Fig. 11, the terminal 1100 may comprise one or more of the following components: a processing component 1102, a memory 1104, a power component 1106, a multimedia component 1108, an audio component 1110, an input/output (I/O) interface 1112, a sensor component 1114 and a communication component 1116.

The processing component 1102 typically controls overall operations of the terminal 1100, such as the operations associated with display, telephone calls, data communications, camera operations and recording operations. The processing component 1102 may include one or more processors 1120 to execute instructions to perform all or some of the steps in the above described methods. Moreover, the processing component 1102 may include one or more modules which facilitate the interaction between the processing component 1102 and other components. For example, the processing component 1102 may comprise a multimedia module to facilitate the interaction between the multimedia component 1108 and the processing component 1102.

The memory 1104 is configured to store various types of data to support the operation of the terminal 1100. Examples of such data comprise instructions for any applications or methods operated on the terminal 1100, various kinds of data, messages, pictures, video, etc. The memory 1104 may be implemented by using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1106 provides power to various components of the terminal 1100. The power component 1106 may comprise a power management system, one or more power sources, and any other components associated with the generation, management, and distribution of power in the terminal 1100.

The multimedia component 1108 comprises a screen providing an output interface between the terminal 1100 and the user. In some embodiments, the screen may comprise a liquid crystal display (LCD) and a touch panel (TP). If the screen comprises the touch panel, the screen may be implemented as a touch screen to receive input signals from the user. The touch panel comprises one or more touch sensors to sense touches, swipes and gestures on the touch panel. The touch sensors may not only sense a boundary of a touch or swipe action, but also sense a period of time and a pressure associated with the touch or swipe action. In some embodiments, the multimedia component 1108 includes a front camera and/or a rear camera. The front camera and the rear camera may receive an external multimedia datum while the terminal 1100 is in an operation mode, such as a photographing mode or a video mode. Each of the front camera and the rear camera may be a fixed optical lens system or have focus and optical zoom capability.

The audio component 1110 is configured to output and/or input audio signals. For example, the audio component 1110 includes a microphone (MIC) configured to receive an external audio signal when the terminal 1100 is in an operation mode, such as a call mode, a recording mode, and a voice recognition mode. The received audio signal may be further stored in the memory 1104 or transmitted via the communication component 1116.

The I/O interface 1112 provides an interface between the processing component 1102 and peripheral interface modules, such as a keyboard, a click wheel, buttons, and the like. The buttons may include, but are not limited to, a home button, a volume button, a starting button, and a locking button.

The sensor component 1114 comprises one or more sensors to provide status assessments of various aspects of the terminal 1100. For instance, the sensor component 1114 may detect an open/closed status of the terminal 1100, relative positioning of components, e.g., the display and the keypad, of the terminal 1100, a change in position of the terminal 1100 or a component of the terminal 1100, presence or absence of user's contact with the terminal 1100, an orientation or an acceleration/deceleration of the terminal 1100, and a change in temperature of the terminal 1100. The sensor component 1114 may include a proximity sensor configured to detect the presence of nearby objects without any physical contact. The sensor component 1114 may also include a light sensor, such as a CMOS or CCD image sensor, for use in imaging applications. In some embodiments, the sensor component 1114 may also include an accelerometer sensor, a gyroscope sensor, a magnetic sensor, a pressure sensor or a temperature sensor.

The communication component 1116 is configured to facilitate communication, wired or wirelessly, between the terminal 1100 and other devices. The terminal 1100 can access a wireless network based on a communication standard, such as WiFi, 2G, or 3G, or a combination thereof. In one embodiment, the communication component 1116 receives a broadcast signal or broadcast associated information from an external broadcast management system via a broadcast channel. In one embodiment, the communication component 1116 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an embodiment, the terminal 1100 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above methods.

In an embodiment not covered by the claimed invention, there is also provided a non-transitory computer-readable storage medium comprising instructions, such as comprised in the memory 1104, executable by the processor 1120 in the terminal 1100, for performing the above-described methods. For example, the non-transitory computer-readable storage medium may be a ROM, a RAM, a CD-ROM, a magnetic tape, a floppy disc, an optical data storage device or the like.

The non-transitory computer-readable storage medium has stored therein instructions that, when executed by a processor of the terminal 1100, cause the terminal 1100 to perform the above methods.

It should be understood that "a plurality of/multiple" mentioned in this invention refers to two or more. The expression "and/or" represents three cases. For example, "A and/or B" may represent cases where only A exists, both A and B exist and only B exists. The symbol "/" represents "or".

It is intended that the scope of the invention only be limited by the appended claims.

## Claims

1. An application calling management method, the application being installed in a terminal, the method executable by the terminal, and the method comprising:
acquiring (101, 201) a background calling message sent by a first application, wherein the background calling message is a message to start another application in the background, and wherein the background calling message requests at least one target application, and the target application is an application to be called by the first application;
determining (102, 202) a calling rule of a current calling, according to the background calling message, wherein the calling rule comprises at least one of a caller, a callee, a called operation for the current calling, a called class name for the current calling and a calling type for the current calling;
if a first calling rule matching the calling rule of the current calling exists in a terminal-disallowing-calling list, determining (103, 203) from the at least one target application at least one application disallowed to be called according to the first calling rule, wherein the terminal-disallowing-calling list comprises at least one calling rule for controlling disallowance of calling, and the at least one application disallowed to be called is all or some of the at least one target application; and
disallowing (104, 204) starting in background the application disallowed to be called;
**characterised in that**
the calling rule of the current calling comprises a callee for the current calling, and determining the calling rule of the current calling according to the background calling message comprises:
acquiring an application identification carried by the background calling message, and determining a target application indicated by the application identification as the callee for the current calling, or
acquiring target operation information carried by the background calling message, and determining among locally installed applications a target application, which supports an operation corresponding to the target operation information, as the callee for the current calling.

2. The method according to claim 1, further comprising:
if a second calling rule matching the calling rule of the current calling exists in a terminal-allowing-calling list, determining (205) from the at least one target application at least one application allowed to be called according to the second calling rule, wherein the terminal-allowing-calling list comprises at least one calling rule for controlling allowance of calling, and the at least one application allowed to be called is all or some of the at least one target application; and
starting (206) in background the application allowed to be called.

3. The method according to claim 2, further comprising:
if the at least one target application comprises an application to be determined whether to be called in addition to the application disallowed to be called and the application allowed to be called, displaying (207) an inquiry message for inquiring a user whether the application to be determined whether to be called is allowed to be called;
after acquiring a disallowing instruction for the inquiry message, disallowing (208) starting in background the application to be determined whether to be called;
after acquiring an allowing instruction for the inquiry message, starting (209) in background the application to be determined whether to be called.

4. The method according to claim 1 or 2, wherein the calling rule of the current calling comprises a caller for the current calling, and
determining the calling rule of the current calling according to the background calling message comprises determining the first application which sends the background calling message as the caller for the current calling.

5. The method according to claim 1 or 2, wherein the calling rule of the current calling comprises a called operation for the current calling, and
determining the calling rule of the current calling according to the background calling message comprises: acquiring target operation information carried by the background calling message, and determining an operation corresponding to the target operation information as the called operation for the current calling.

6. The method according to claim 1 or 2, wherein the calling rule of the current calling comprises a called class name for the current calling, and
determining the calling rule of the current calling according to the background calling message comprises: acquiring a target class name carried by the background calling message, and determining the target class name as the called class name for the current calling.

7. The method according to claim 1 or 2, wherein the calling rule of the current calling comprises a calling type for the current calling, and
determining the calling rule of the current calling according to the background calling message comprises: determining a target calling type adopted by the first application for sending the background calling message as the calling type for the current calling.

8. The method according to claim 2, further comprising:
sending a list acquiring request to a server, wherein the list acquiring request includes identifications of locally installed applications, and the server is configured to acquire calling rules related to the locally installed applications from an general calling disallowance list to obtain the terminal-disallowing-calling list, and to acquire calling rules related to the locally installed applications from an general calling allowance list to obtain the terminal-allowing-calling list; and
receiving the terminal-disallowing-calling list and the terminal-allowing-calling list sent by the server.

9. The method according to claim 2, further comprising:
displaying at least one calling disallowance rule related to the first application; when acquiring a calling authorization instruction corresponding to a target calling disallowance rule, deleting the target calling disallowance rule from the terminal-disallowing-calling list, and adding the target calling disallowance rule into the terminal-allowing-calling list as a calling allowance rule; and/or
displaying at least one calling allowance rule related to the first application; when acquiring a calling prohibition instruction corresponding to a target calling allowance rule, deleting the target calling allowance rule from the terminal-allowing-calling list, and adding the target calling allowance rule into the terminal-disallowing-calling list as a calling disallowance rule.

10. An application calling management apparatus, the application being installed in a terminal, the apparatus being implementable by the terminal, and the apparatus comprising:
an acquiring module (510) configured to acquire a background calling message sent by a first application, wherein the background calling message is a message to start another application in the background, and wherein the background calling message requests at least one target application, and the target application is an application to be called by the first application;
a first determining module (520) configured to determine a calling rule of a current calling according to the background calling message, wherein the calling rule comprises at least one of a caller, a callee, a called operation for the current calling, a called class name for the current calling and a calling type for the current calling;
a second determining module (530) configured to, if a first calling rule matching the calling rule of the current calling exists in a terminal-disallowing-calling list, determine from the at least one target application at least one application disallowed to be called according to the first calling rule, wherein the terminal-disallowing-calling list comprises at least one calling rule for controlling disallowance of calling, and the at least one application disallowed to be called is all or some of the at least one target application; and
a disallowing module (540) configured to disallow starting in background the application disallowed to be called;
**characterised in that**
the calling rule of the current calling comprises a callee for the current calling, and
wherein a second determining sub-module (520b) is configured to acquire an application identification carried by the background calling message, and determine a target application indicated by the application identification as the callee for the current calling; or
wherein a second determining sub-module (520b) is configured to acquire target operation information carried by the background calling message, and determine among locally installed applications a target application, which supports an operation corresponding to the target operation information, as the callee for the current calling.

11. An application calling management method, the application being installed in a terminal, the method being implementable by hardware, and the method comprising:
receiving (401), in a terminal, a background calling message sent by a first application and determining at least one target application corresponding to the background calling message, wherein the background calling message is a message to start another application in the background, and wherein the target application is an application to be called by the first application;
acquiring (402), in the terminal, a terminal-disallowing-calling list pre-stored and corresponding to the first application, the terminal-disallowing-calling list recording at least one application that cannot be called by the first application; and
starting (403), in the terminal, in the background an application among the at least one target application which is not included in the terminal-disallowing-calling list, and disallowing (403) starting in background an application among the at least one target application which is included in the terminal-disallowing-calling list;
wherein the background calling message carries an application identification, and determining the at least one target application corresponding to the background calling message comprises determining a target application corresponding to the application identification carried by the background calling message; or
wherein the background calling message carries target operation information, and determining the at least one target application corresponding to the background calling message comprises determining among locally installed applications a target application supporting an operation corresponding to the target operation information.

12. An application calling management apparatus, the application being installed in a terminal, the apparatus implementable by hardware, and the apparatus comprising:
a determining module (710) configured to receive a background calling message sent by a first application and determine at least one target application corresponding to the background calling message, wherein the background calling message is a message to start another application in the background, and wherein the target application is an application to be called by the first application;
an acquiring module (720) configured to acquire a terminal-disallowing-calling list pre-stored and corresponding to the first application, the terminal-disallowing-calling list recording at least one application that cannot be called by the first application; and
a starting module (730) configured to start in background an application among the at least one target application which is not included in the terminal-disallowing-calling list, and to disallow starting in background an application among the at least one target application which is included in the terminal-disallowing-calling list;
wherein the background calling message carries an application identification and determining module (710) is configured to determine a target application corresponding to the application identification carried by the background calling message; or
wherein the background calling message carries target operation information; and the determining module 710 is configured to determine among locally installed applications a target application supporting an operation corresponding to the target operation information.

## Patentansprüche

1. Anwendungsaufrufverwaltungsverfahren, wobei die Anwendung in einem Endgerät installiert ist, das Verfahren von dem Endgerät ausführbar ist und wobei das Verfahren umfasst:
Erfassen (101, 201) einer Hintergrundaufrufnachricht, die von einer ersten Anwendung gesendet wird, wobei die Hintergrundaufrufnachricht eine Nachricht zum Starten einer anderen Anwendung im Hintergrund ist und wobei die Hintergrundaufrufnachricht mindestens eine Zielanwendung anfordert und die Zielanwendung eine Anwendung ist, die von der ersten Anwendung aufzurufen ist;
Bestimmen (102, 202) einer Aufrufregel eines aktuellen Aufrufs gemäß der Hintergrundaufrufnachricht, wobei die Aufrufregel mindestens eines von einem Aufrufer, einem Aufgerufenen, einem aufgerufenen Vorgang für den aktuellen Aufruf, einem aufgerufenen Klassennamen für den aktuellen Aufruf und einem Aufruftyp für den aktuellen Aufruf umfasst;
falls eine erste Aufrufregel, die mit der Aufrufregel des aktuellen Aufrufs übereinstimmt, in einer Endgeräteaufrufuntersagungsliste besteht, Bestimmen (103, 203) aus der mindestens einen Zielanwendung mindestens eine Anwendung, die gemäß der ersten Aufrufregel nicht aufgerufen werden darf, wobei die Endgeräteaufrufuntersagungsliste mindestens eine Aufrufregel zum Steuern von Untersagen eines Aufrufs umfasst und die mindestens eine Anwendung, die nicht aufgerufen werden darf, die Gesamtheit oder ein Teil der mindestens einen Zielanwendung ist; und
Untersagen (104, 204) des Startens, im Hintergrund, der Anwendung, die nicht aufgerufen werden darf; **dadurch gekennzeichnet, dass**
die Aufrufregel des aktuellen Aufrufs einen Aufgerufenen für den aktuellen Aufruf umfasst, und
Bestimmen der Aufrufregel des aktuellen Aufrufs gemäß der Hintergrundaufrufnachricht umfasst:
Erfassen einer Anwendungsidentifikation, die von der Hintergrundaufrufnachricht getragen wird, und Bestimmen einer Zielanwendung, die von der Anwendungsidentifikation angegeben wird, als den Aufgerufenen für den aktuellen Aufruf, oder
Erfassen von Zielvorgangsinformationen, die von der Hintergrundaufrufnachricht getragen werden, und Bestimmen einer Zielanwendung unter lokal installierten Anwendungen, die einen Vorgang unterstützt, der den Zielvorgangsinformationen entspricht, als den Aufgerufenen für den aktuellen Aufruf.

2. Verfahren nach Anspruch 1, weiter umfassend:
falls eine zweite Aufrufregel, die mit der Aufrufregel des aktuellen Aufrufs übereinstimmt, in einer Endgeräteaufrufgenehmigungsliste besteht, Bestimmen (205), aus der mindestens einen Zielanwendung, mindestens einer Anwendung, die gemäß der zweiten Aufrufregel aufgerufen werden darf, wobei die Endgeräteaufrufgenehmigungsliste mindestens eine Aufrufregel zum Steuern von Genehmigen eines Aufrufs umfasst und die mindestens eine Anwendung, die aufgerufen werden darf, die Gesamtheit oder ein Teil der mindestens einen Zielanwendung ist; und
Starten (206), im Hintergrund, der Anwendung, die aufgerufen werden darf.

3. Verfahren nach Anspruch 2, weiter umfassend:
falls, die mindestens eine Zielanwendung eine Anwendung umfasst, von der zu bestimmen ist, ob sie zusätzlich zu der Anwendung, die nicht aufgerufen werden darf, und der Anwendung, die aufgerufen werden darf, aufzurufen ist, Anzeigen (207) einer Anfragenachricht zum Fragen eines Benutzers, ob die Anwendung, von der zu bestimmen ist, ob sie aufzurufen ist, aufgerufen werden darf;
nach Erfassen einer Untersagungsnachricht für die Anfragenachricht, Untersagen (208) von Starten, im Hintergrund, der Anwendung, von der zu bestimmen ist, ob sie aufzurufen ist;
nach Erfassen einer Genehmigungsnachricht für die Anfragenachricht, Starten (209), im Hintergrund, der Anwendung, von der zu bestimmen ist, ob sie aufzurufen ist.

4. Verfahren nach Anspruch 1 oder 2, wobei die Aufrufregel des aktuellen Aufrufs einen Aufrufer für den aktuellen Aufruf umfasst, und
Bestimmen der Aufrufregel des aktuellen Aufrufs gemäß der Hintergrundaufrufnachricht ein Bestimmen der ersten Anwendung, die die Hintergrundaufrufnachricht sendet, als den Aufrufer für den aktuellen Aufruf umfasst.

5. Verfahren nach Anspruch 1 oder 2, wobei die Aufrufregel des aktuellen Aufrufs einen aufgerufenen Vorgang für den aktuellen Aufruf umfasst, und
Bestimmen der Aufrufregel des aktuellen Aufrufs gemäß der Hintergrundaufrufnachricht umfasst: Erfassen von Zielvorgangsinformationen, die von der Hintergrundaufrufnachricht getragen werden, und Bestimmen eines Vorgangs, der den Zielvorgangsinformationen entspricht, als den aufgerufenen Vorgang für den aktuellen Aufruf.

6. Verfahren nach Anspruch 1 oder 2, wobei die Aufrufregel des aktuellen Aufrufs einen aufgerufenen Klassennamen für den aktuellen Aufruf umfasst, und
Bestimmen der Aufrufregel des aktuellen Aufrufs gemäß der Hintergrundaufrufnachricht umfasst: Erfassen eines Zielklassennamens, der von der Hintergrundaufrufnachricht getragen wird, und Bestimmen des Zielklassennamens als den aufgerufenen Klassennamen für den aktuellen Aufruf.

7. Verfahren nach Anspruch 1 oder 2, wobei die Aufrufregel des aktuellen Aufrufs einen Aufruftyp für den aktuellen Aufruf umfasst, und
Bestimmen der Aufrufregel des aktuellen Aufrufs gemäß der Hintergrundaufrufnachricht umfasst: Bestimmen eines Zielaufruftyps, der von der ersten Anwendung zum Senden der Hintergrundaufrufnachricht übernommen wird, als den Aufruftyp für den aktuellen Aufruf.

8. Verfahren nach Anspruch 2, weiter umfassend:
Senden einer Listenerfassungsanfrage an einen Server, wobei die Listenerfassungsanfrage Identifikationen von lokal installierten Anwendungen einschließt, und der Server konfiguriert ist, um von einer allgemeinen Aufrufuntersagungsliste Aufrufregeln zu erfassen, die sich auf die lokal installierten Anwendungen beziehen, um die Endgeräteaufrufuntersagungsliste zu erhalten, und von einer allgemeinen Aufrufgenehmigungsliste Aufrufregeln zu erfassen, die sich auf die lokal installierten Anwendungen beziehen, um die Endgeräteaufrufgenehmigungsliste zu erhalten; und
Empfangen der Endgeräteaufrufuntersagungsliste und der Endgeräteaufrufgenehmigungsliste, die von dem Server gesendet werden.

9. Verfahren nach Anspruch 2, weiter umfassend:
Anzeigen mindestens einer Aufrufuntersagungsregel, die sich auf die erste Anwendung bezieht; bei Erfassen einer Aufrufgestattungsanweisung, die einer Zielaufrufuntersagungsregel entspricht, Löschen der Zielaufrufuntersagungsregel von der Endgeräteaufrufuntersagungsliste und Hinzufügen der Zielaufrufuntersagungsregel zu der Endgeräteaufrufgenehmigungsliste als eine Aufrufgenehmigungsregel; und/oder
Anzeigen mindestens einer Aufrufgenehmigungsregel, die sich auf die erste Anwendung bezieht; bei Erfassen einer Aufrufunterbindungsanweisung, die einer Zielaufrufgenehmigungsregel entspricht, Löschen der Zielaufrufgenehmigungsregel von der Endgeräteaufrufgenehmigungsliste und Hinzufügen der Zielaufrufgenehmigungsregel zu der Endgeräteaufrufuntersagungsliste als eine Aufrufuntersagungsregel.

10. Anwendungsaufrufverwaltungseinrichtung, wobei die Anwendung in einem Endgerät installiert ist, die Einrichtung von dem Endgerät implementierbar ist und die Einrichtung umfasst:
ein Erfassungsmodul (510), das konfiguriert ist, um eine Hintergrundaufrufnachricht, die von einer ersten Anwendung gesendet wird, zu erfassen, wobei die Hintergrundaufrufnachricht eine Nachricht zum Starten einer anderen Anwendung im Hintergrund ist und wobei die Hintergrundaufrufnachricht mindestens eine Zielanwendung anfordert und die Zielanwendung eine Anwendung ist, die von der ersten Anwendung aufzurufen ist;
ein erstes Bestimmungsmodul (520), das konfiguriert ist, um eine Aufrufregel eines aktuellen Aufrufs gemäß der Hintergrundaufrufnachricht zu bestimmen, wobei die Aufrufregel mindestens eines von einem Aufrufer, einem Aufgerufenen, einem aufgerufenen Vorgang für den aktuellen Aufruf, einem aufgerufenen Klassennamen für den aktuellen Aufruf und einem Aufruftyp für den aktuellen Aufruf umfasst;
ein zweites Bestimmungsmodul (530), das konfiguriert ist, falls eine erste Aufrufregel, die mit der Aufrufregel des aktuellen Aufrufs übereinstimmt, in einer Endgeräteaufrufuntersagungsliste besteht, aus der mindestens einen Zielanwendung mindestens eine Anwendung zu bestimmen, die gemäß der ersten Aufrufregel nicht aufgerufen werden darf, wobei die Endgeräteaufrufuntersagungsliste mindestens eine Aufrufregel zum Steuern von Untersagen eines Aufrufs umfasst und die mindestens eine Anwendung, die nicht aufgerufen werden darf, die Gesamtheit oder ein Teil der mindestens einen Zielanwendung ist; und
ein Untersagungsmodul (540), das konfiguriert ist, um Starten, im Hintergrund, der Anwendung, die nicht aufgerufen werden darf, zu untersagen;
**dadurch gekennzeichnet, dass** die Aufrufregel des aktuellen Aufrufs einen Aufgerufenen für den aktuellen Aufruf umfasst, und
wobei ein zweites Bestimmungsuntermodul (520b) konfiguriert ist, um eine Anwendungsidentifikation, die von der Hintergrundaufrufnachricht getragen wird, zu erfassen und eine Zielanwendung, die von der Anwendungsidentifikation angegeben wird, als den Aufgerufenen für den aktuellen Aufruf zu bestimmen; oder
wobei ein zweites Bestimmungsuntermodul (520b) konfiguriert ist, um Zielvorgangsinformationen, die von der Hintergrundaufrufnachricht getragen werden, zu erfassen, und unter lokal installierten Anwendungen eine Zielanwendung, die einen Vorgang unterstützt, der den Zielvorgangsinformationen entspricht, als den Aufgerufenen für den aktuellen Aufruf zu bestimmen.

11. Anwendungsaufrufverwaltungseinrichtung, wobei die Anwendung in einem Endgerät installiert, das Verfahren durch Hardware implementierbar ist und das Verfahren umfasst:
Empfangen (401), in einem Endgerät, einer Hintergrundaufrufnachricht, die von einer ersten Anwendung gesendet wird, und Bestimmen mindestens einer Zielanwendung, die der Hintergrundaufrufnachricht entspricht, wobei die Hintergrundnachricht eine Nachricht zum Starten einer anderen Anwendung im Hintergrund ist und wobei die Zielanwendung eine Anwendung ist, die von der ersten Anwendung aufzurufen ist;
Erfassen (402), im Endgerät, einer Endgeräteaufrufuntersagungsliste, die vorab gespeichert ist und der ersten Anwendung entspricht, wobei die Endgeräteaufrufuntersagungsliste mindestens eine Anwendung verzeichnet, die nicht von der ersten Anwendung aufgerufen werden kann; und
Starten (403), im Endgerät im Hintergrund, einer Anwendung aus der mindestens einen Zielanwendung, die nicht in der Endgeräteaufrufuntersagungsliste eingeschlossen ist, und Untersagen (403) des Startens, im Hintergrund, einer Anwendung aus der mindestens einen Zielanwendung, die in der Endgeräteaufrufuntersagungsliste eingeschlossen ist;
wobei die Hintergrundaufrufnachricht eine Anwendungsidentifikation trägt, und Bestimmen der einen Zielanwendung, die der Hintergrundaufrufnachricht entspricht, Bestimmen einer Zielanwendung umfasst, die der Anwendungsidentifikation entspricht, die von der Hintergrundaufrufnachricht getragen wird; oder
wobei die Hintergrundaufrufnachricht Zielvorgangsinformationen trägt, und Bestimmen der mindestens einen Zielanwendung, die der Hintergrundaufrufnachricht entspricht, Bestimmen einer Zielanwendung unter lokal installierten Anwendungen umfasst, die einen Vorgang unterstützt, der den Zielvorgangsinformationen entspricht.

12. Anwendungsaufrufverwaltungseinrichtung, wobei die Anwendung in einem Endgerät installiert ist, die Einrichtung durch Hardware implementierbar ist und die Einrichtung umfasst:
ein Bestimmungsmodul (710), das konfiguriert ist, um eine Hintergrundaufrufnachricht zu empfangen, die von einer ersten Anwendung gesendet wird, und mindestens eine Zielanwendung zu bestimmen, die der Hintergrundaufrufnachricht entspricht, wobei die Hintergrundaufrufnachricht eine Nachricht zum Starten einer anderen Anwendung im Hintergrund ist und wobei die Zielanwendung eine Anwendung ist, die von der ersten Anwendung aufzurufen ist;
ein Erfassungsmodul (720), das konfiguriert ist, um eine Endgeräteaufrufuntersagungsliste, die vorab gespeichert ist und der ersten Anwendung entspricht, zu erfassen, wobei die Endgeräteaufrufuntersagungsliste mindestens eine Anwendung verzeichnet, die nicht von der ersten Anwendung aufgerufen werden kann; und
ein Startmodul (730), das konfiguriert ist, um im Hintergrund eine Anwendung aus der mindestens einen Zielanwendung, die nicht in der Endgeräteaufrufuntersagungsliste eingeschlossen ist, zu starten, und das Starten, im Hintergrund, einer Anwendung aus der mindestens einen Zielanwendung, die in der Endgeräteaufrufuntersagungsliste eingeschlossen ist, zu untersagen;
wobei die Hintergrundaufrufnachricht eine Anwendungsidentifikation trägt und das Bestimmungsmodul (710) konfiguriert ist, um eine Zielanwendung zu bestimmen, die der Anwendungsidentifikation entspricht, die von der Hintergrundaufrufnachricht getragen wird; oder
wobei die Hintergrundaufrufnachricht Zielvorgangsinformationen trägt und das Bestimmungsmodul (710) konfiguriert ist, um aus lokal installierten Anwendungen eine Zielanwendung zu bestimmen, die einen Vorgang unterstützt, der den Zielvorgangsinformationen entspricht.

## Revendications

1. Procédé de gestion d'appel d'application, l'application étant installée dans un terminal, le procédé étant exécutable par le terminal, et le procédé comprenant :
une acquisition (101, 201) d'un message d'appel en arrière-plan envoyé par une première application, dans lequel le message d'appel en arrière-plan est un message pour lancer une autre application en arrière-plan, et dans lequel le message d'appel en arrière-plan requiert au moins une application cible, et l'application cible est une application devant être appelée par la première application ;
une détermination (102, 202) d'une règle d'appel d'un appel courant, conformément au message d'appel en arrière-plan, dans lequel la règle d'appel comprend au moins un d'un appelant, un appelé, une opération appelée pour l'appel courant, un nom de classe appelé pour l'appel courant et un type d'appel pour l'appel courant ;
si une première règle d'appel coïncidant avec la règle d'appel de l'appel courant existe dans une liste d'appel de non-autorisation de terminal, une détermination (103, 203) à partir de la au moins une application cible d'au moins une application non autorisée à être appelée conformément à la première règle d'appel, dans lequel la liste d'appel de non-autorisation de terminal comprend au moins une règle d'appel pour commander une non-autorisation d'appel, et la au moins une application non autorisée à être appelée est toutes ou certaines de la au moins une application cible ; et
une non-autorisation (104, 204) d'un lancement en arrière-plan de l'application non autorisée à être appelée ; **caractérisé en ce que**
la règle d'appel de l'appel courant comprend un appelé pour l'appel courant, et
la détermination de la règle d'appel de l'appel courant conformément au message d'appel en arrière-plan comprend :
une acquisition d'une identification d'application transportée par le message d'appel en arrière-plan, et une détermination d'une application cible indiquée par l'identification d'application en tant qu'appelé pour l'appel courant, ou
une acquisition d'informations d'opération de cible transportées par le message d'appel en arrière-plan, et une détermination parmi des applications installées localement d'une application cible, qui prend en charge une opération correspondant aux informations d'opération de cible, en tant qu'appelé pour l'appel courant.

2. Procédé selon la revendication 1, comprenant en outre :
si une seconde règle d'appel coïncidant avec la règle d'appel de l'appel courant existe dans une liste d'appel d'autorisation de terminal, une détermination (205) à partir de la au moins une application cible d'au moins une application autorisée à être appelée conformément à la seconde règle d'appel, dans lequel la liste d'appel d'autorisation de terminal comprend au moins une règle d'appel pour commander une autorisation d'appel, et la au moins une application autorisée à être appelée est toutes ou certaines de la au moins une application cible ; et
un lancement (206) en arrière-plan de l'application autorisée à être appelée.

3. Procédé selon la revendication 2, comprenant en outre :
si la au moins une application cible comprend une application pour laquelle déterminer si elle doit être appelée en plus de l'application non autorisée à être appelée et de l'application autorisée à être appelée, un affichage (207) d'un message d'interrogation pour interroger un utilisateur quant à si l'application pour laquelle déterminer si elle doit être appelée est autorisée à être appelée ;
après l'acquisition d'une instruction de non-autorisation pour le message d'interrogation, une non-autorisation (208) d'un lancement en arrière-plan de l'application pour laquelle déterminer si elle doit être appelée ;
après l'acquisition d'une instruction d'autorisation pour le message d'interrogation, un lancement (209) en arrière-plan de l'application pour laquelle déterminer si elle doit être appelée.

4. Procédé selon la revendication 1 ou 2, dans lequel la règle d'appel de l'appel courant comprend un appelant pour l'appel courant, et
la détermination de la règle d'appel de l'appel courant conformément au message d'appel en arrière-plan comprend une détermination de la première application qui envoie le message d'appel en arrière-plan en tant qu'appelant pour l'appel courant.

5. Procédé selon la revendication 1 ou 2, dans lequel la règle d'appel de l'appel courant comprend une opération appelée pour l'appel courant, et
la détermination de la règle d'appel de l'appel courant conformément au message d'appel en arrière-plan comprend : une acquisition d'informations d'opération de cible transportées par le message d'appel en arrière-plan, et une détermination d'une opération correspondant aux informations d'opération de cible en tant qu'opération appelée pour l'appel courant.

6. Procédé selon la revendication 1 ou 2, dans lequel la règle d'appel de l'appel courant comprend un nom de classe appelé pour l'appel courant, et
la détermination de la règle d'appel de l'appel courant conformément au message d'appel en arrière-plan comprend : une acquisition d'un nom de classe de cible transporté par le message d'appel en arrière-plan, et une détermination du nom de classe de cible en tant que nom de classe appelé pour l'appel courant.

7. Procédé selon la revendication 1 ou 2, dans lequel la règle d'appel de l'appel courant comprend un type d'appel pour l'appel courant, et
la détermination de la règle d'appel de l'appel courant conformément au message d'appel en arrière-plan comprend : une détermination d'un type d'appel de cible adopté par la première application pour envoyer le message d'appel en arrière-plan en tant que type d'appel pour l'appel courant.

8. Procédé selon la revendication 2, comprenant en outre :
un envoi d'une requête d'acquisition de liste à un serveur, dans lequel la requête d'acquisition de liste inclut des identifications d'applications installées localement, et le serveur est configuré pour acquérir des règles d'appel liées aux applications installées localement à partir d'une liste de non-autorisation d'appel générale pour obtenir la liste d'appel de non-autorisation de terminal, et pour acquérir des règles d'appel liées aux applications installées localement à partir d'une liste d'autorisation d'appel générale pour obtenir la liste d'appel d'autorisation de terminal ; et
une réception de la liste d'appel de non-autorisation de terminal et de la liste d'appel d'autorisation de terminal envoyées par le serveur.

9. Procédé selon la revendication 2, comprenant en outre :
un affichage d'au moins une règle de non-autorisation d'appel liée à la première application ; lors de l'acquisition d'une instruction de permission d'appel correspondant à une règle de non-autorisation d'appel de cible, une suppression de la règle de non-autorisation d'appel de cible de la liste d'appel de non-autorisation de terminal, et un ajout de la règle de non-autorisation d'appel de cible à la liste d'appel d'autorisation de terminal en tant que règle d'autorisation d'appel ; et/ou
un affichage d'au moins une règle d'autorisation d'appel liée à la première application ; lors de l'acquisition d'une instruction d'interdiction d'appel correspondant à une règle d'autorisation d'appel de cible, une suppression de la règle d'autorisation d'appel de cible de la liste d'appel d'autorisation de terminal, et un ajout de la règle d'autorisation d'appel de cible à la liste d'appel de non-autorisation de terminal en tant que règle de non-autorisation d'appel.

10. Appareil de gestion d'appel d'application, l'application étant installée dans un terminal, l'appareil pouvant être implémenté par le terminal, et l'appareil comprenant :
un module d'acquisition (510) configuré pour acquérir un message d'appel en arrière-plan envoyé par une première application, dans lequel le message d'appel en arrière-plan est un message pour lancer une autre application en arrière-plan, et dans lequel le message d'appel en arrière-plan requiert au moins une application cible, et l'application cible est une application devant être appelée par la première application ;
un premier module de détermination (520) configuré pour déterminer une règle d'appel d'un appel courant, conformément au message d'appel en arrière-plan, dans lequel la règle d'appel comprend au moins un d'un appelant, un appelé, une opération appelée pour l'appel courant, un nom de classe appelé pour l'appel courant et un type d'appel pour l'appel courant ;
un second module de détermination (530) configuré pour, si une première règle d'appel coïncidant avec la règle d'appel de l'appel courant existe dans une liste d'appel de non-autorisation de terminal, déterminer à partir de la au moins une application cible au moins une application non autorisée à être appelée conformément à la première règle d'appel, dans lequel la liste d'appel de non-autorisation de terminal comprend au moins une règle d'appel pour commander une non-autorisation d'appel, et la au moins une application non autorisée à être appelée est toutes ou certaines de la au moins une application cible ; et
un module de non-autorisation (540) configuré pour ne pas autoriser un lancement en arrière-plan de l'application non autorisée à être appelée ;
**caractérisé en ce que** la règle d'appel de l'appel courant comprend un appelé pour l'appel courant, et
dans lequel un second sous-module de détermination (520b) est configuré pour acquérir une identification d'application transportée par le message d'appel en arrière-plan, et déterminer une application cible indiquée par l'identification d'application en tant qu'appelé pour l'appel courant ; ou
dans lequel un second sous-module de détermination (520b) est configuré pour acquérir des informations d'opération de cible transportées par le message d'appel en arrière-plan, et déterminer parmi des applications installées localement une application cible, qui prend en charge une opération correspondant aux informations d'opération de cible, en tant qu'appelé pour l'appel courant.

11. Procédé de gestion d'appel d'application, l'application étant installée dans un terminal, le procédé pouvant être implémenté par du matériel, et le procédé comprenant :
une réception (401), dans un terminal, d'un message d'appel en arrière-plan envoyé par une première application et une détermination d'au moins une application cible correspondant au message d'appel en arrière-plan, dans lequel le message d'appel en arrière-plan est un message pour lancer une autre application en arrière-plan, et dans lequel l'application cible est une application devant être appelée par la première application ;
une acquisition (402), dans le terminal, d'une liste d'appel de non-autorisation de terminal stockée au préalable et correspondant à la première application, la liste d'appel de non-autorisation de terminal enregistrant au moins une application qui ne peut pas être appelée par la première application ; et
un lancement (403), dans le terminal, en arrière-plan, d'une application parmi la au moins une application cible qui n'est pas incluse dans la liste d'appel de non-autorisation de terminal, et une non-autorisation (403) d'un lancement en arrière-plan d'une application parmi la au moins une application cible qui n'est pas incluse dans la liste d'appel de non-autorisation de terminal ;
dans lequel le message d'appel en arrière-plan transporte une identification d'application, et la détermination de la au moins une application cible correspondant au message d'appel en arrière-plan comprend une détermination d'une application cible correspondant à l'identification d'application transportée par le message d'appel en arrière-plan ; ou
dans lequel le message d'appel en arrière-plan transporte des informations d'opération de cible, et la détermination de la au moins une application cible correspondant au message d'appel en arrière-plan comprend une détermination parmi des applications installées localement d'une application cible prenant en charge une opération correspondant aux informations d'opération de cible.

12. Appareil de gestion d'appel d'application, l'application étant installée dans un terminal, l'appareil pouvant être implémenté par du matériel, et l'appareil comprenant :
un module de détermination (710) configuré pour recevoir un message d'appel en arrière-plan envoyé par une première application et déterminer au moins une application cible correspondant au message d'appel en arrière-plan, dans lequel le message d'appel en arrière-plan est un message pour lancer une autre application en arrière-plan, et dans lequel l'application cible est une application devant être appelée par la première application ;
un module d'acquisition (720) configuré pour acquérir une liste d'appel de non-autorisation de terminal stockée au préalable et correspondant à la première application, la liste d'appel de non-autorisation de terminal enregistrant au moins une application qui ne peut pas être appelée par la première application ; et
un module de lancement (730) configuré pour lancer en arrière-plan une application parmi la au moins une application cible qui n'est pas incluse dans la liste d'appel de non-autorisation de terminal, et pour ne pas autoriser un lancement en arrière-plan d'une application parmi la au moins une application cible qui est incluse dans la liste d'appel de non-autorisation de terminal ;
dans lequel le message d'appel en arrière-plan transporte une identification d'application et le module de détermination (710) est configuré pour déterminer une application cible correspondant à l'identification d'application transportée par le message d'appel en arrière-plan ; ou
dans lequel le message d'appel en arrière-plan transporte des informations d'opération de cible ; et le module de détermination (710) est configuré pour déterminer parmi des applications installées localement une application cible prenant en charge une opération correspondant aux informations d'opération de cible.
